# EUROPEAN PATENT APPLICATION

(11) **EP 4 604 425 A1**
(43) Date of publication of application: **20.08.2025**
(21) Application number: 23884649.7
(22) Date of filing: 24.10.2023
(51) Int. Cl.: H04B 17/391

(54) **ELECTRONIC DEVICE, METHOD FOR WIRELESS COMMUNICATION, AND COMPUTER READABLE STORAGE MEDIUM**

(30) Priority: 01.11.2022 CN 202211355521
(71) Applicant: Sony Group Corporation, Tokyo 108-0075 (JP)
(72) Inventor: SUN, Chen, Beijing 100027 (CN); FAN, Tingting, Beijing 100027 (CN); BAI, Yingshuang, Beijing 100027 (CN)
(74) Representative: D Young & Co LLP
(86) International application number: PCT/CN2023/126116
(87) International publication number: WO 2024/093717

(57) **Abstract**

The present invention relates to an electronic device, a method for wireless communication, and a computer readable storage medium. The electronic device comprises a processing circuit. The processing circuit is configured to: determine, on the basis of the movement speed of a terminal device, a coherence time of a channel where the terminal device is located; and determine, on the basis of the coherence time, a restriction condition for selecting, for the terminal device, a prediction model for downlink beam prediction. The prediction model determines successive F pieces of prediction information for a downlink beam on the basis of K pieces of measurement information obtained by means of successive K times of beam measurement for the downlink beam on a terminal device side, wherein K and F are each a natural number greater than or equal to 1. The restriction condition comprises: a time from first beam measurement in the K times of beam measurements to the last pieces of prediction information in the F pieces of prediction information is less than or equal to the coherence time.

## Description

The present application claims priority to Chinese Patent Application No. 202211355521.X, titled "ELECTRONIC DEVICE, METHOD FOR WIRELESS COMMUNICATION, AND COMPUTER-READABLE STORAGE MEDIUM", filed on November 1, 2022 with the China National Intellectual Property Administration, which is incorporated herein by reference in its entirety.

### FIELD

The present application relates to the field of wireless communication technology, and more specifically, to an electronic device conducive to selecting or determining a beam prediction model, a method for wireless communication, and a computer-readable storage medium.

### BACKGROUND

With the development of artificial intelligence (AI)/machine learning (ML) technology, the application of AI/ML models in the field of wireless communication has also received increasing attention.

At present, using AI/ML model as beam prediction model for beam management is one of the important research directions. The AI/ML model can be trained by historical data of beam measurement, and the trained AI/ML model can be used to predict beam information. In this way, beam management by AI/ML model can replace the conventional beam scanning process to reduce overhead.

### SUMMARY

A brief overview of the present disclosure is provided below, in order to provide a basic understanding of certain aspects of the present disclosure. However, it should be understood that this overview is not an exhaustive summary of the present disclosure. It is not intended to identify critical or essential elements of the present disclosure, nor is it intended to define the scope of the present disclosure. Its sole purpose is to present some concepts of the present disclosure in a simplified form, as a preface to the more detailed description provided later.

An object of at least one aspect of the present disclosure is to provide an electronic device, a method for wireless communication, and a computer-readable storage medium, which are capable of determining a constraint condition for selecting a prediction model for downlink beam prediction, thereby facilitating the selection or determination of an appropriate beam prediction model.

According to one aspect of the present disclosure, an electronic device is provided. The electronic device comprises processing circuitry, configured to: determine a coherence time of a channel in which a terminal device is located, based on a moving speed of the terminal device; and determine, based on the coherence time, the constraint condition for selecting the prediction model for downlink beam prediction for the terminal device, wherein the prediction model determines, based on K pieces of measurement information obtained through sequential K beam measurements (i.e. sequential K times of beam measurements) for a downlink beam by the terminal device side, sequential F pieces of prediction information for the downlink beam, wherein K and F are each a natural number greater than or equal to 1, wherein the constraint condition comprises that the time from the time of the first beam measurement among the K beam measurements to the time of the last piece of prediction information among the F pieces of prediction information is less than or equal to the coherence time.

According to another aspect of the present disclosure, a method for wireless communication is also provided. The method comprises that determining the coherence time of the channel in which the terminal device is located, based on the moving speed of the terminal device; and determine, based on the coherence time, the constraint condition for selecting the prediction model for downlink beam prediction for the terminal device, wherein the prediction model determines, based on K pieces of measurement information obtained through sequential K beam measurements for a downlink beam by the terminal device side, sequential F pieces of prediction information for the downlink beam, wherein K and F are each a natural number greater than or equal to 1, wherein the constraint condition comprises that the time from the time of the first beam measurement among the K beam measurements to the time of the last piece of prediction information among the F pieces of prediction information is less than or equal to the coherence time.

According to another aspect of the present disclosure, a non-transitory computer-readable storage medium having a executable instruction stored thereon is further provided, wherein when executed by a processor, the executable instruction cause the processor to perform the above-described method for wireless communication or various functions of the above-described electronic device.

According to other aspects of the present disclosure, computer program code and computer program products for implementing the above-mentioned method according to the present disclosure are also provided.

According to at least one aspect of an embodiment of the present disclosure, the constraint condition of the prediction model for downlink beam prediction is determined based on the coherence time of the channel, and the constraint condition includes that the time difference between the measurement information of the earliest historical beam measurement to be used by the prediction model and the prediction information of a latest future time point to be predicted is within the coherence time. With such constraint condition, it can be ensured that the channel environment represented by the earliest measurement information is still applicable to the prediction information of the latest future time point, thereby facilitating the selection of the prediction model that can provide a more accurate prediction result.

Other aspects of the embodiments of the present disclosure are given in the following description section, wherein the detailed description is used to fully disclose the preferred embodiments of the embodiments of the present disclosure without imposing limitations thereon.

### BRIEF DESCRIPTION OF THE DRAWINGS

The drawings described herein are for illustrative purposes only of selected embodiments, rather than all possible embodiments, and are not intended to limit the scope of the present disclosure. In the drawings:
FIG. 1 is a schematic diagram for illustrating an example of the use of a beam prediction model according to the present disclosure;
FIG. 2 is a block diagram illustrating a configuration example of the electronic device according to an embodiment of the present disclosure;
FIG. 3 is a schematic diagram illustrating an example of the prediction model library;
FIG. 4 is a flowchart for illustrating one example of a signaling interaction for explaining the prediction model determination process of the electronic device implemented on the base station side;
FIG. 5 is a flowchart for illustrating one example of the signaling interaction for explaining the prediction model transmission process of the electronic device implemented on the base station side;
FIG. 6 is a flowchart for illustrating one example of the signaling interaction for explaining a prediction information transmission process of the electronic device implemented on the base station side;
FIG. 7 is a flowchart for illustrating one example of the signaling interaction for explaining the prediction model training process of the electronic device implemented on the base station side;
FIG. 8 is a flowchart for illustrating one example of the signaling interaction for explaining a model requirement determination and transmission process of the electronic device implemented on the terminal device side;
FIG. 9 is a flowchart for illustrating one example of the signaling interaction for explaining the prediction model acquisition process of the electronic device implemented on the terminal device side;
FIG. 10 is a flowchart for illustrating one example of the signaling interaction for explaining a prediction information acquisition process of the electronic device implemented on the terminal device side;
FIG. 11 is a flowchart for illustrating one example of the signaling interaction for explaining the prediction model training data reporting process of the electronic device implemented on the terminal device side;
FIG. 12 is a flowchart illustrating a process example of a method for wireless communication according to the embodiment of the present disclosure;
FIG. 13 is a block diagram illustrating a first example of a schematic configuration of an eNB to which the technology of the present disclosure may be applied;
FIG. 14 is a block diagram illustrating a second example of a schematic configuration of an eNB to which the technology of the present disclosure may be applied;
FIG. 15 is a block diagram illustrating an example of a schematic configuration of a smartphone to which the technology of the present disclosure can be applied;
FIG. 16 is a block diagram illustrating an example of a schematic configuration of a car navigation device to which the technology of the present disclosure can be applied.

Although the present disclosure is susceptible to various modifications and alternative forms, its specific embodiments have been illustrated in the accompanying drawings as examples and are described in detail herein. However, it should be understood that the description of the specific embodiments herein is not intended to limit the present disclosure to disclosed concrete forms, but on the contrary, the present disclosure is intended to cover all modifications, equivalences and alternatives that fall within the spirit and scope of the present disclosure. It should be noted that, throughout several drawings, corresponding reference numerals indicate corresponding parts.

### DETAILED DESCRIPTION OF EMBODIMENTS

The embodiments of the present disclosure will be described completely in conjunction with the drawings. The following description is only exemplary, and is not intended to limit the present disclosure, and applications or usages thereof.

Exemplary embodiments are provided so that the present disclosure will be thorough and complete, and will fully convey the scope of the present disclosure to those skilled in the art. Numerous specific details, such as examples of specific components, devices, and methods, are described to provide a detailed understanding of the embodiments of the present disclosure. It is apparent for those skilled in the art that the exemplary embodiments may be implemented in many different forms without specific details, and should not be construed to limit the scope of the present disclosure. In some exemplary embodiments, well-known processes, well-known structures, and well-known technologies are not described in detail.

The descriptions are provided in the following order:
1. Summary
2. Configuration examples of the electronic device
   2.1 Configuration examples
   2.2 Example processing in the electronic device implemented on the base station side
   2.3 Example processing in the electronic device implemented on the terminal side
3. Method embodiments
4. Application examples

### < 1. Summary >

As described above, the AI/ML model can be trained with historical data of beam measurement, and the trained AI/ML model can be used to predict beam information. In a recent 3GPP meeting, for beam management based on the AI/ML model, beam management sub-case 2 (BM-Case2) for downlink beam prediction was discussed. In downlink beam prediction such as BM-Case2, the trained AI/ML model can take, for example, K historical measurement results or K pieces of historical measurement information (also referred to as measurement result or measurement information herein) obtained through the most recent K (wherein K is a natural number greater than or equal to 1) beam measurements as input, and output, for example, F (wherein F is a natural number at least 1) pieces of prediction information for downlink beams at F future time points.

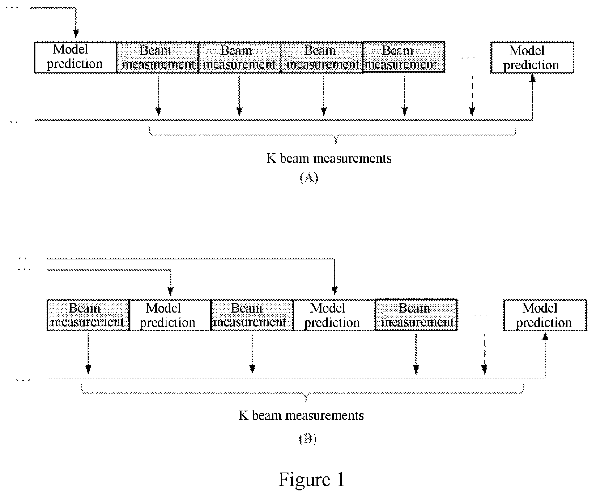

In beam management, the above-mentioned AI/ML model (prediction model) can be used for beam prediction to replace the existing beam scanning or beam measurement process to a certain extent, thereby reducing overhead. FIG. 1 illustrates an example of using the prediction model according to the present disclosure, including an example of using a downlink beam prediction model of a continuous mode and a downlink beam prediction model of a discrete mode in beam management. The prediction model used in the example of FIG. 1 can be various artificial intelligence or machine learning models, for example, a model pre-acquired based on a neural network (such as a convolutional neural network (CNN), a time recurrent neural network (RNN) such as a long short-term memory (LSTM) network, etc.) or other AI/ML technology, and the present disclosure is not limited to this.

In (A) of FIG. 1, an example of using the prediction model of the continuous mode for model prediction in beam management is illustrated. In this mode, each time when a prediction is performed, the K pieces of measurement information obtained from the most recent consecutive K beam measurements on the terminal side are used as input to the prediction model. The measurement information obtained from each beam measurement may include, but is not limited to, measurement information for N candidate beams, such as reference signal received power RSRP of the N candidate beams, etc. (N is a natural number greater than or equal to 1), and may optionally also include information about the measurement time of the measurement (this information may be used, for example, for RNN-based prediction models such as LSTM-based prediction models). The prediction model outputs prediction information for F future time points based on the measurement information of the most recent consecutive K beam measurements, and the prediction information may have various appropriate forms, for example, but not limited to, the predicted probability that each candidate beam is the optimal beam at each future time point, etc. For a given prediction model, K and F are pre-specified natural numbers, and the specific value of each time point of the F future time point and/or the interval between respective time points can be pre-specified (for example, by specifying the interval from the current time for making a prediction) or obtained through training, and the present disclosure does not limit this.

In the above example, for instance, beam measurement may be performed each time when a beam failure occurs, or may be performed periodically according to a preset beam measurement period. Moreover, for example, model prediction may be performed each time when K measurement results are obtained and then a new beam failure occurs, or may be performed periodically according to a preset beam prediction period. The present disclosure does not limit the conditions or timing that triggers beam measurement and beam prediction, as long as it provides the most recent K beam measurements required by the model.

In (B) of FIG. 1, an example of using the prediction model of the discrete mode in beam management is illustrated. In this mode, each time when a prediction is performed, K pieces of measurement information obtained from the most recent discontinuous K beam measurements are used as input to the prediction model. That is, the K beam measurements of the discrete mode are not continuous, and at least two (or even every two) adjacent beam measurements in the K beam measurements are interspersed with beam management using model prediction instead of beam measurement. In addition to this difference, in theory, the triggering conditions for each beam measurement and beam prediction and the measurement information obtained in each beam measurement for the prediction model of the discrete mode can be the same as those for the prediction model of the continuous mode. In one example, the triggering condition of the beam measurement after each model prediction can be the expiration or end time of F pieces of prediction information of each model prediction (i.e., the expiration time of the last (piece of) prediction information, for example, the expiration time of the F-th (piece of) prediction information corresponding to the F-th future time point plus the valid time of the prediction information at that time point).

Currently, it has not yet been proposed how to determine an appropriate beam prediction model, that is, how to select an appropriate prediction model characterized by parameters K and F. In addition, the selection of different modes of prediction models has also not been proposed.

In view of the above situation, the inventors have proposed the inventive concept of the present invention: determining the constraint condition of the prediction model based on the coherence time of the channel, the condition including that the time difference between the measurement information of the earliest historical beam measurement to be used by the prediction model and the prediction information of the latest future time point to be predicted is within the coherence time. By using such constraint condition, it can be ensured that the channel environment represented by the earliest measurement information is still applicable to the prediction information of the latest future time point, thereby facilitating the selection of the prediction model that can give a more accurate prediction result. In addition, optionally, the inventors have also proposed that a prediction model of a discrete mode or a continuous mode can be selected, so that the corresponding mode can be selected in different situations and/or according to different factors.

### <2. Configuration examples of the electronic device>

### [2.1 Configuration examples ]

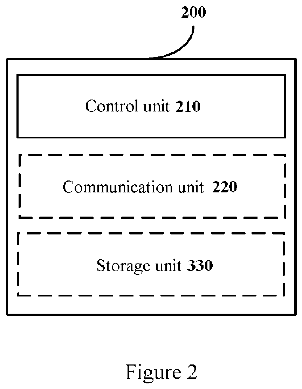

FIG. 2 is a block diagram illustrating an example configuration of the electronic device according to an embodiment of the present disclosure.

As illustrated in FIG. 2, the electronic device 200 may include a control unit 210. Optionally, the electronic device 200 may include, for example, a communication unit 220 for transmitting information to or receiving information from another device, and a storage unit 230 for storing various data, programs, and information, etc.

Here, each unit of the electronic device 200 may be included in the processing circuitry. It should be noted that the electronic device 200 may include one processing circuitry or multiple processing circuitry. Further, the processing circuitry may include various discrete functional units to perform various functions and/or operations. It should be noted that these functional units may be physical entities or logical entities, and different named units may be implemented by the same physical entity. The electronic device 200 may be a base station side device or the terminal device, which is not limited here.

According to an embodiment of the present disclosure, the control unit 210 of the electronic device 200 may determine the coherence time of the channel in which the terminal device is located based on the moving speed of the terminal device.

The control unit 210 can calculate the coherence time according to the reciprocal of the Doppler shift of the channel, wherein the Doppler shift can be calculated as (the moving speed of the terminal device*subcarrier spacing/speed of light). When the electronic device 200 is the base station side device, the control unit 210 can, for example, obtain the moving speed reported by the terminal device as received through the communication unit 220, and calculate the coherence time of the channel based on the moving speed in the above manner. When the electronic device 200 is the terminal device, the control unit 210 can, for example, obtain the moving speed obtained through the measurement by the terminal device itself, and calculate the coherence time of the channel in the above manner.

The control unit 210 may determine, based on the coherence time, the constraint condition for selecting the prediction model for downlink beam prediction for the terminal device. Here, the prediction model can determines, based on K pieces of measurement information obtained through sequential K beam measurements for a downlink beam by the terminal device side, sequential F pieces of prediction information for the downlink beam, wherein K and F are each a natural number greater than or equal to 1. In other words, the prediction model can input K pieces of measurement information (obtained via sequential K beam measurements) and outputs F pieces of prediction information. Thus, K and F can be viewed as parameters of the prediction model (i.e., model parameters that define the number of pieces of measurement information input to the prediction model and the number of pieces of prediction information output by the prediction model). The constraint condition for selecting the prediction model determined by the control unit 210 based on the coherence time may comprise that the time from the first beam measurement among the K beam measurements to the time of the last piece of prediction information among the F pieces of prediction information should be less than or equal to the coherence time.

The above-mentioned constraint condition means that the time difference between the measurement information of the earliest beam measurement (the first beam measurement among the K beam measurements) of the measurement information to be input into the prediction model and the prediction information of the latest future time point to be predicted (the last prediction information among F pieces of prediction information) is within the coherence time. In other words, the sum of the measurement duration TM of the K beam measurements of the measurement information to be input into the prediction model (for example, the time from the time of the first beam measurement among the K beam measurements to the current time) and the prediction duration TP of F pieces of prediction information to be output by the model (for example, the time from the current time to the time of the last prediction information among F pieces of prediction information) is within the coherence time TC, that is, (TM+TP)≤TC (hereinafter, this condition is sometimes referred to as the overall constraint condition for selecting the prediction model).

By using such constraint condition, it can be ensured that the channel environment represented by the earliest measurement information to be used is still applicable to the prediction information at the latest future time point, thereby facilitating the selection of the prediction model capable of performing accurate prediction. This constraint condition can be applied to the selection of prediction models of the continuous mode and the discrete mode illustrated in FIG.1.

Here, consider the example case where the subcarrier spacing is 30 KHz, the duration of each time slot is 0.5 ms, and the moving speed of the terminal device is 120 km/h, and other cases are similar. For this example case, the control unit 210 can calculate the coherence time of the channel where the terminal device is located by calculating the reciprocal of the Doppler shift, which is about 1 ms, i.e., two time slots.

In this example, in order to ensure that the channel environment represented by the earliest measurement information used by the prediction model finally selected is still applicable to the prediction information at the latest future time point, the time of the first beam measurement among the K beam measurements to the time of the last prediction information among F pieces of prediction information should be within two time slots. If the prediction model with a K value that is too large is selected at this time, resulting in the measurement duration of the K beam measurements occupying two time slots, the prediction accuracy of the prediction model will not be improved due to the large number of input values; rather, it will be likely affected. On the other hand, if the prediction model with an F value that is too large is selected, resulting in the prediction duration of F pieces of prediction information occupying two time slots, the prediction model cannot accurately predict. Therefore, the constraint condition determined by the control unit 210 ensures that the prediction model with appropriate K and F values (and an appropriate prediction duration TP) needs to be selected within the coherence time of two time slots, so that the sum of the measurement duration TM and the prediction duration TP can be ensured to be within the coherence time TC, so as to make an appropriate selection of the model.

In the case where the prediction model library is obtained in advance, the control unit 210 can determine whether each prediction model in the pre-acquired prediction model library meets the above-mentioned constraint condition via an appropriate method, thereby determining the prediction model that meets the constraint condition.

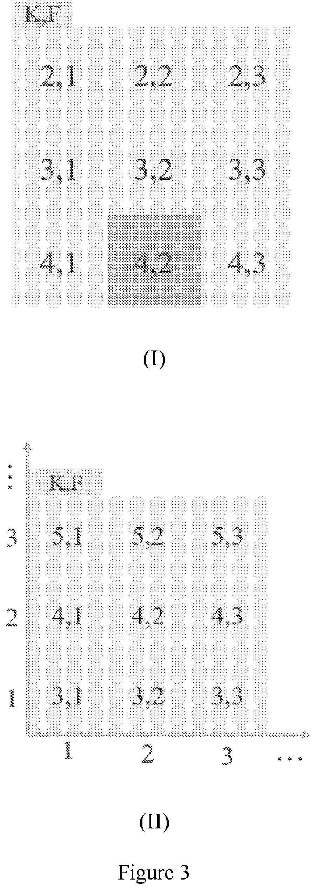

Preferably, the storage unit 230 of the electronic device 200 stores the prediction model library, which includes pre-trained, for example, M prediction models (M is a natural number greater than or equal to 1) with different modes (the continuous mode or the discrete mode) and/or different parameter values of K and F. Optionally, each prediction model has a corresponding index. As an example, two examples in the prediction model library including the continuous modes stored in the storage unit 230 are illustrated in FIG. 3. In example (I), each prediction model is represented by (K, F) values. In example (II), in addition to the method of using (K, F), each prediction model is represented by a combination of coordinates of the horizontal axis and the vertical axis as an index representation. For example, the coordinate 2/2 can represent the prediction model with (K, F) being (4, 2). In the following, i is used to represent the (serial) number of each prediction model for ease of description, wherein i is a natural number greater than or equal to 1 and less than or equal to M.

The control unit 210 can, via various means, determine, among the M prediction models in the prediction model library, whether each prediction model i meets the overall constraint condition (TM+TP)≤TC based on the coherence time. This determination is made according to the parameters of each prediction model i (for example, but not limited to the values of Kᵢ and Fᵢ of each prediction model and the value of the prediction duration TPᵢ), based on the real-time measurement information of the downlink beam by the terminal device and optional historical measurement information.

In one implementation, the electronic device 200 is implemented on the terminal side, and directly implements downlink beam measurement using the communication unit 220 via various known methods under the control of the control unit 210, thereby obtaining L pieces of real-time measurement information in the form of a time series (L is a natural number), wherein each (piece of) measurement information includes not only the measurement result for the downlink beam but also the time when the measurement information is obtained. At this time, for each prediction model i, the control unit 210 can determine the measurement duration TMᵢ of the Kᵢ beam measurement corresponding to the most recent Kᵢ pieces of measurement information based on the L pieces of real-time measurement information (for example, TMᵢ can be the time from the measurement time of the Kᵢ-th (piece of) measurement information from the last in the L pieces of real-time measurement information to the current time), thereby determining, based on the sum of the measurement duration TMᵢ and the prediction duration TPᵢ, whether the prediction model i meets the above-mentioned constraint condition (TMᵢ+TPᵢ)≤TC based on the coherence time.

In another implementation, the electronic device 200 is implemented on the base station side, and receives real-time measurement information of the downlink beam from the terminal device via the communication unit 220. At this time, in one example, the real-time measurement information includes time information, and the electronic device can make a judgment in the same manner as when it is implemented on the terminal side, which will not be repeated here.

In another example, the L pieces of real-time measurement information of the downlink beam received by the electronic device 200 on the base station side from the terminal device do not include specific time information, but only include the sequence number of each measurement information. At this time, the electronic device 200 on the base station side can appropriately use the historical measurement information obtained previously to determine the upper limit Kup of the prediction model K, and select the prediction model i that meets the upper limit condition, that is, K ≤ Kup, and has the prediction duration TP < the coherence time TC in the prediction model library as a candidate. Besides, it can specify, for example, according to the coherence time TC and the prediction duration TPᵢ of the candidate prediction model, the beam measurement period Tmᵢ of the terminal device (that is, Tmᵢ=TC-TPᵢ), require the terminal device to measure within the beam measurement period Tmᵢ, and determine whether the prediction model i meets the condition according to whether the number Lᵢ of measurement results obtained within the beam measurement period Tmᵢ reaches Kᵢ. For example, if the number Lᵢ of measurement results obtained within the beam measurement period Tmᵢ reaches or exceeds Kᵢ, it is considered that the prediction model meets the constraint condition TM+TP≤TC. This will be described in detail later in the example of the base station side.

Regardless of whether the electronic device 200 is implemented on the terminal side or the base station side, when there are multiple models that meet the above-mentioned constraint condition in the prediction model library, for example, when there are prediction models i and j that each meet TM+TP≤TC, the control unit 210 of the electronic device 200 can select the prediction model with a larger K value (more input values) or a larger F value (more predicted values) based on accuracy priority or efficiency priority, which will not be elaborated here.

Optionally, although not illustrated in the example of FIG. 3, the prediction model library stored in the storage unit 230 of the electronic device 200 may also include a non-continuous prediction model. In this case, the control unit 210 may also be configured to select the prediction model of the continuous mode or the discrete mode, wherein the prediction model of the continuous mode is based on measurement information obtained through continuous K beam measurements, and the prediction model of the discrete mode is based on measurement beam information obtained through discontinuous K beam measurements.

As an example, the control unit 210 can select the prediction model of the continuous mode or the discrete mode based on the coherence time.

In one example, the control unit 210 may select a prediction model of the continuous mode when the coherence time is short (e.g., when the terminal device is in a fast fading channel). Generally speaking, when K is the same, the measurement duration of the prediction model of the continuous mode is shorter than that of the prediction model of the discrete mode. In other words, under the constraint of the shorter coherence time, the measurement information from a larger number or a sufficient number of measurements can be used, resulting in higher prediction accuracy. In another example, the control unit 210 may select the prediction model of the discrete mode when the coherence time is long (e.g., when the terminal device is in a slow fading channel). At this time, since the coherence time is long, the constraint on the measurement duration is relatively loose, and even with the model of the discrete mode, measurement information from a sufficient number of measurements can be used. Therefore, choosing the prediction model of the discrete mode can enhance the model's efficiency.

Alternatively, the control unit 210 may select the prediction model of the continuous mode or the discrete mode based on a priority of accuracy or efficiency, as long as the following constraint condition is met: the time interval from the first beam measurement among the K beam measurements to the last prediction information (of F pieces of prediction information) is less than or equal to the coherence time; the present disclosure does not make any further provisions in this regard.

Note that for the prediction model of the discrete mode, the control unit 210 can also determine whether the prediction model meets the constraint condition (TM+TP)≤TC, i.e. the sum of the measurement duration TM and the prediction duration TP being within the coherence time, based on the real-time measurement data or historical measurement data, the parameters of each prediction model itself (such as but not limited to the values of K and F of each prediction model, the value of the prediction duration TP, and optionally the variable or fixed intervals between the various prediction time points F and the various prediction time points F), and the real-time measurement information or historical measurement information of the downlink beam by the terminal device. The discrete mode differs from the continuous mode in that the measurement duration TM includes one or more stages of using F prediction beams instead of direct measurement (such as illustrated in (B) of FIG. 1). However, as long as the real-time measurement data or the historical measurement data for the use of the model is obtained, it can be determined whether (TM+TP)≤TC is met in a manner substantially similar to that for the continuous mode, which will not be further elaborated here.

Next, the example processing implemented by the electronic device 200 in different situations on the base station side and the terminal side will be further described.

### [2.2 Example processing of electronic device implemented on the base station side]

First, consider the example case where the electronic device 200 is implemented on the base station side, for example, but not limited to, as the base station side device. At this time, preferably, the prediction model library is stored in the storage unit of the electronic device 200, including a plurality of pre-trained prediction models, for example, with different modes (the continuous mode or the discrete mode) and/or different parameter values of K and F, such as the prediction model library illustrated in FIG. 3.

In this example, the communication unit 220 of the electronic device 200 may be configured to receive information about the moving speed reported by the terminal device, so that the control unit 210 can calculate the coherence time. As an example, the information about the moving speed received by the electronic device may be carried by several bits added by the terminal device in the uplink control information (UCI), and/or carried by the physical uplink shared channel (PUSCH). The communication unit 220 may periodically receive information about the moving speed reported by the terminal device, for example.

The control unit 210 can calculate the coherence time accordingly based on the received the moving speed, and determine the constraint condition for selecting the prediction model based on coherence time, i.e., the sum of measurement duration and prediction duration being within the coherence time. Alternatively, control unit 210 can also, for example, select the prediction model of the continuous mode or the discrete mode based on the consideration of the coherence time and/or precision/efficiency. Here, for ease of description, the prediction model of the continuous mode being selected by control unit 210 is taken as an example for subsequent description.

In one preferred embodiment, the control unit 210 of the electronic device 200 may also be configured to: determine an additional constraint condition for selecting the prediction model for the terminal device based on the moving speed or the coherence time of the terminal device and the pre-acquired historical measurement information for the downlink beam. The additional constraint condition may comprise that K of the prediction model is less than or equal to the upper limit on the number of measurements, and the upper limit on the number of measurements is determined according to the number of beam measurements included in the historical measurement information corresponding to the moving speed or the coherence time. For example, the upper limit on the number of measurements may be the maximum value, minimum value or median value of the number of beam measurements included in the coherence time in the historical measurement information corresponding to the moving speed.

Due to the correspondence between the moving speed of the terminal device and the coherence time, i.e., the channel environment, it is considered that the certain moving speed or coherence time corresponds to a certain channel environment, and then corresponds to the same or similar number of beam failures within the same coherence time, and then corresponds to the same or similar number of beam measurements. Therefore, in this preferred embodiment, the control unit 210 determines the upper limit on the number of beam measurements Kup that may be obtained at the current moving speed or current coherence time based on the current moving speed of the terminal device or the coherence time of the current channel, using the correspondence between the historical moving speed or the historical coherence time and the number of beam measurements included in the historical measurement information, so as to select the parameter K of the prediction model under the constraint of the upper limit on the number Kup.

Optionally, the control unit 210 may be further configured to: determine the prediction model that meets the constraint condition in the pre-acquired prediction model library.

Here, the constraint condition considered by the control unit 210 may include the above-mentioned overall constraint condition based on the coherence time, that is, the sum of the measurement duration and the prediction duration is within the coherence time (TM+TP≤ TC), and optionally also include the additional constraint condition that K of the prediction model is less than or equal to the upper limit on the number of measurements Kup (K≤Kup).

The control unit can first determine the candidate prediction model i in the prediction model library based on the constraint condition of K≤Kup and prediction duration TP<TC, and specify the beam measurement period Tmᵢ for the candidate prediction model according to the coherence time TC and the prediction duration TPᵢ of the candidate prediction model (i.e., Tmᵢ=TC-TPᵢ), and determine whether the candidate model meets the constraint condition according to whether the number Lᵢ of (pieces of) measurement information of beam measurements obtained by the terminal device side within the period reaches Kᵢ of the candidate prediction model.

Next, in conjunction with the example of the prediction model library illustrated in (I) of FIG. 3, the example processing that the control unit 200 determines the prediction model in the above manner is described. In this example, for ease of description, it is considered that the prediction models with the same F value have the same prediction duration, that is, the prediction models of each column in (I) of FIG. 3 have the same prediction duration.

In one example, the control unit 210 may first exclude those models whose K is greater than the upper limit on the number of measurements Kup from the M prediction models under the constraint of the additional constraint condition. In this example, assuming that the upper limit of the additional constraint condition calculated by the control unit 210 is Kup=3, each model whose K is 4 in the last row in the model library of (I) of FIG. 3 may be excluded. In addition, the control unit 210 may also exclude those prediction models whose TP is greater than or equal to TC in the prediction model library according to the constraint of the prediction duration TP<TC. In this example, for example, the prediction models of the last column that meet F=3 and thus involve too long prediction duration TP_{F=3} is excluded, and the prediction models of the second column with F=2 are selected from the first two columns to ensure the prediction efficiency. In this way, the control unit 210 selects the prediction models of F=2 and K≤3, that is, the prediction model numbered 2, K₂=2, F₂=2, with the prediction duration TP_{F=2} and the prediction model numbered 5, K₅=3, F₅=2, with the prediction duration TP_{F=2}, as the candidate prediction models.

Next, the control unit 210 sends information about the beam measurement period to the terminal device via the communication unit 220, for example, based on the coherence time TC and the prediction duration TP_{F=2} of the prediction model, so as to specify the beam measurement period Tm_{F=2} of the terminal device (i.e., Tm_{F=2}=TC-TP_{F=2}) and require the terminal device to perform measurement within the beam measurement period Tm_{F=2} and report measurement information. As an example, the communication unit 220 may receive measurement information reported via a physical uplink control channel (PUCCH) or a PUSCH from the terminal device.

Next, the control unit 210 determines whether the prediction model numbered 2 or 5 meets the condition according to whether the number of measurement results included in the measurement information obtained in the beam measurement period Tm_{F=2} received from the terminal device reaches or exceeds K₂=2 or K₅=3. For example, assuming that the number of measurement results obtained in the beam measurement period Tm_{F=2} is 3, that is, it exceeds K₂=2 and reaches K₅=3, the control unit 210 deems that the prediction models numbered 2 and 5 both meet the constraint condition TM+TP≤TC, and the prediction models numbered 2 and 5 can be determined as prediction models that meet the constraint condition. For another example, assuming that the number of measurement results obtained is 2, the control unit 210 can determine only the prediction model numbered 2 as the prediction model that meets the constraint condition. In this way, the control unit 210 can determine one or more prediction models that meet the constraint condition.

Alternatively, assuming that the number of measurement results obtained within the beam measurement period Tm_{F=2} is 1, the control unit 210 deems that the prediction models numbered 2 and 5 do not meet the constraint condition TM+TP≤TC, and determines that there is no prediction model that meets the constraint condition in the prediction model library.

As mentioned above, there may be a plurality of prediction models that meet the constraint condition in the prediction model library. At this time, the control unit 210 can further determine one or more models from among them based on the consideration of accuracy and/or efficiency, such as the optimal model (such as but not limited to the model with the highest accuracy) and/or the suboptimal model (such as but not limited to the model with the highest efficiency), which will not be elaborated here.

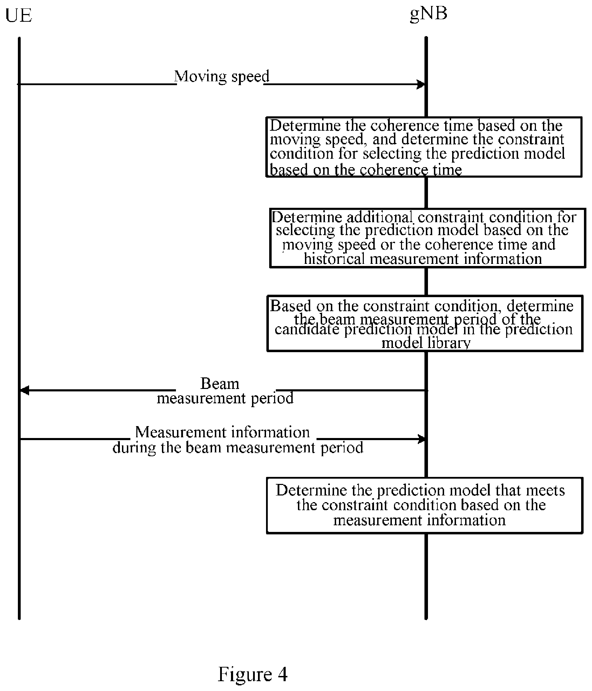

FIG. 4 illustrates a flowchart of one example signaling interaction for implementing the above-mentioned model determination process in the electronic device on the base station side, wherein the base station gNB has the function of the electronic device 200 and serves the terminal device UE. Note that although FIG. 4 illustrates that the gNB receives the moving speed reported by the UE and then performs subsequent model determination processing, in actual applications, the gNB can, for example, re-determine the model only when the moving speed changes significantly (for example, the change in the moving speed causes a significant change in the coherence time, which indicates that the channel environment has changed significantly), otherwise the previously determined model is used.

Optionally, the control unit 210 of the electronic device 200 can be further configured to use the communication unit 220 under control to send the determined one or more prediction models or prediction information obtained based on the one or more prediction models to the terminal device.

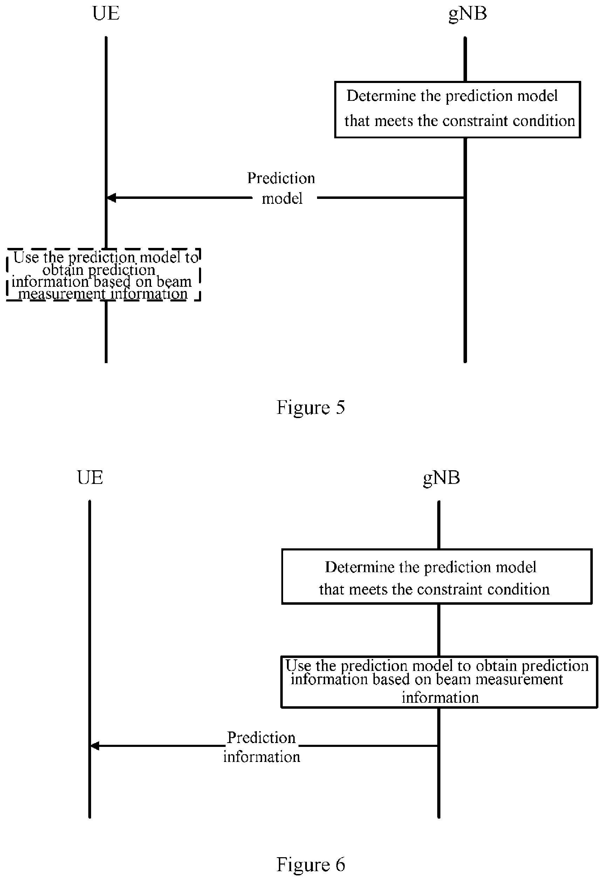

The electronic device 200 may select different transmission content based on the capabilities of the terminal device. Next, the example signaling interaction process will be described in conjunction with FIG. 5 and FIG. 6. In FIG. 5 and FIG. 6, the base station gNB has the function of the electronic device 200 and serves the terminal device UE.

In one example, when the terminal device has strong storage and/or computing capabilities, it is considered that the terminal device can carry the model and can independently perform prediction. At this time, as illustrated in the example of FIG. 5, the gNB directly sends the determined prediction model, and the UE that receives the prediction model can perform prediction processing on its own. As an example, the gNB can transmit the determined prediction model through coordinate transmissions by one or more of Radio Resource Control (RRC), Medium Access Control-Control Element (MAC CE), Downlink Control Information (DCI), and/or Physical Downlink Shared Channel (PDSCH).

On the other hand, when the terminal device has poor storage and/or computing capabilities, it is considered that the terminal device cannot carry the model or independently perform prediction. In this case, as illustrated in the example of FIG. 6, the gNB needs to perform prediction by itself using the determined prediction model. After the prediction, the base station gNB sends the prediction information or the prediction result to the UE. As an example, the gNB can carry the prediction result by adding several bits in the DCI and/or carry the prediction result through the PDSCH.

Optionally, the control unit 210 of the electronic device 200 can be further configured to control the communication unit 220 to notify the terminal device to report the measurement information of the downlink beam to train the prediction model that meets the constraint condition when there is no prediction model that meets the constraint condition in the prediction model library.

One of the possible reasons for the absence of the prediction model that meets the constraint condition is that the parameters K, F and/or prediction duration TP of the currently existing prediction model are too large to meet the current requirement under the shorter coherence time (the sum of the measurement duration and the prediction duration is equal to the coherence time). In this case, a new model with smaller values of K and/or F that meet the requirement can be retrained. For example, a new model with smaller values of K and F such as (1,1), (1,2), (2,1) and shorter prediction duration TP can be trained.

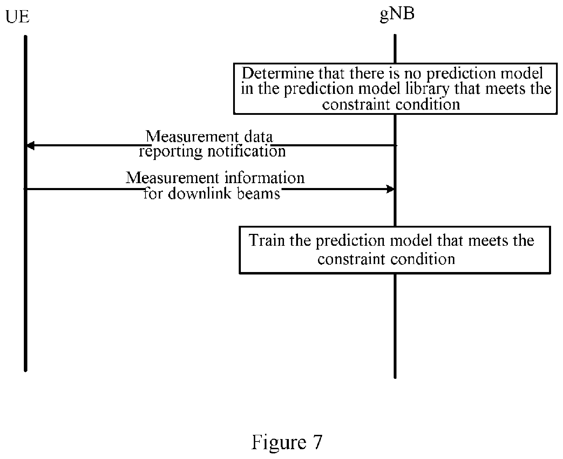

Next, one example signaling interaction process in this case will be described in conjunction with FIG. 7. FIG. 7 is a flow chart of an example signaling interaction for illustrating the prediction model training process implemented in the electronic device on the base station side. In this example, for example, through a process similar to the process for determining a model that meets the constraint condition in FIG. 4, it is determined that there is no prediction model that meets the constraint condition in the prediction model library.

As illustrated in FIG. 7, after determining that there is no prediction model that meets the constraint condition in the prediction model library, the gNB sends a training data reporting notification to the UE (for example, via DCI or PDSCH), and receives measurement information of the downlink beam sent by the UE based on the reporting notification (for example, via PUCCH or PUSCH). Thereafter, the gNB uses the obtained measurement information as training data to train the prediction model that meets the constraint condition.

In the example of FIG. 7, the gNB may send a corresponding training data reporting notification according to the model training requirement, and the UE may send the measurement information that meets the requirement as training data according to the training data reporting notification of the gNB. In one example, the training data reporting notification may simply require the UE to report the measurement result including the time information so that the gNB selects the measurement information that meets the model requirement (TM+TP ≤TC) as the training data, which will not be described in detail here.

Alternatively, the control unit 210 of the electronic device 200 may be further configured to use, when there is no prediction model that meets the constraint condition in the prediction model library, another prediction model in the prediction model library as the determined prediction model. For example, at this time, the prediction model closest to the constraint condition can be selected from the existing prediction models, such as the candidate prediction model determined by the condition that the K value is below the upper limit Kup and/or the prediction duration TP is less than the coherence time TC. After that, the control unit 210 can control the communication unit 220 to send the determined one or more prediction models or the prediction information obtained based on the one or more prediction models to the terminal device. The example signaling process of this situation is similar to that of FIG. 5 and FIG. 6, except that the prediction model that meets the constraint condition is not determined, but for example, the prediction model closest to the constraint condition is used as the determined prediction model. The configuration of this alternative example is suitable for situations where there are not enough resources for training, etc.

### [2.3 Example processing of the electronic device implemented on the terminal side]

Next, consider an example case where the electronic device 200 is implemented on the terminal side, for example but not limited to being implemented as the terminal device.

### (Example processing where the electronic device does not have a deployed prediction model)

First, consider the case where the electronic device 200 is implemented as the terminal device and has no model deployed by itself. In this case, preferably, the base station side device serving the electronic device 200 stores the prediction model library, which includes a plurality of pre-trained prediction models, for example, with different modes (the continuous mode or the discrete mode) and/or different parameter values of K and F, such as the prediction model library illustrated in FIG. 3.

In this case, in the storage unit of the electronic device 200 on the terminal side, although the complete prediction model library is not stored, there may be stored, for example, key parameters and information of each prediction model in the prediction model library, such as K, F, prediction duration TP and optional index of each model. In one example, when the prediction model library includes prediction models of different modes (the continuous mode or the discrete mode) at the same time, optionally, the mode information of each prediction model can also be stored in the storage unit of the electronic device 200.

In this example, the control unit 210 of the electronic device 200 can obtain the moving speed obtained through the measurement by the electronic device 200itself as the terminal device (for example, obtained via various existing methods of measuring the moving speed, which is not limited in this disclosure). The control unit 210 can, for example, periodically obtain the moving speed of the terminal device.

The control unit 210 can calculate the coherence time accordingly based on the moving speed obtained, and determine the constraint condition for selecting the prediction model based on the coherence time, i.e., the sum of the measurement duration and the prediction duration is within the coherence time. Optionally, control unit 210 can also for example select the prediction model of the continuous mode or the discrete mode based on the consideration of coherence time and/or precision/efficiency. Here, for ease of description, an example will be described in which the control unit 210 selects the prediction model of the continuous mode to carry out subsequent description with control unit 210.

In one preferred embodiment, the control unit 210 of the electronic device 200 may also be configured to: determine the additional constraint condition for selecting the prediction model for the terminal device based on the coherence time and the real-time measurement information for the downlink beam. The additional constraint condition may comprise that K of the prediction model is less than or equal to the upper limit on the number of measurements, and the upper limit on the number of measurements Kup may be determined by, for example, the number L of beam measurements included in the real-time measurement information within the period of the coherence time traced back from the current time point, that is, the upper limit on the number Kup=L.

Optionally, the control unit 210 can be further configured to: determine the prediction model that meets the constraint condition in the pre-acquired prediction model library.

Here, the constraint condition considered by the control unit 210 may include the above-mentioned overall constraint condition based on the coherence time, that is, the sum of the measurement duration and the prediction duration is within the coherence time (TM+TP≤ TC), and optionally also include the additional constraint condition that the K of the prediction model is less than or equal to the upper limit on the number of measurements Kup (K≤Kup).

In one example, the control unit 210 may first exclude those prediction models whose TP is greater than or equal to TC from the M prediction models according to the constraint condition that the prediction duration TP<TC, and exclude those models whose K is greater than the upper limit on the number of measurements Kup under the constraint of the additional constraint condition, and then determine whether each remaining model (or one or more models selected from the remaining models) meets the overall constraint condition that the sum of the measurement duration and the prediction duration is within the coherence time (TM+TP≤TC).

For example, consider the case where L pieces of real-time measurement information in the form of a time series within the coherence time is obtained, and each (piece of) measurement information includes not only the measurement result for the downlink beam but also the time when the measurement information is obtained. At this time, for each prediction model i in the prediction model library, the control unit 210 can determine, based on the L pieces of real-time measurement information, the measurement duration TMᵢ of the Kᵢ beam measurement corresponding to the most recent Kᵢ pieces of measurement information (for example, TMᵢ can be the time from the measurement time of the Kᵢ-th measurement information from the last in the L pieces of real-time measurement information to the current time), thereby determining, based on the sum of the measurement duration TMᵢ and the prediction duration TPᵢ, whether the prediction model i meets the above-mentioned constraint condition (TMᵢ+TPᵢ)≤TC based on the coherence time.

Alternatively, based on the difference between the coherence time TC and the prediction duration TPᵢ, the measurement duration Tmᵢ suitable for the prediction model i can be determined, and whether the prediction model i meets the above-mentioned constraint condition based on the coherence time can be determined based on whether the number of measurement results within the measurement duration Tmᵢ traced back from the current time reaches Kᵢ. This alternative method is similar to the determination method when the electronic device is implemented on the base station side, and will not be described in detail here.

Next, in conjunction with the example of the prediction model library illustrated in (I) of FIG. 3, an exemplary process is described where the control unit 200 determines the prediction model that meets the constraint condition and then determines and sends the model requirement. In this example, for the convenience of description, it is considered that the prediction models with the same F value have the same prediction duration, that is, the prediction models in each column of (I) of FIG. 3 have the same prediction duration.

In one example, the control unit 210 may exclude those models whose K is greater than the upper limit on the number of measurements Kup from the M prediction models under the constraint of the additional constraint condition. In this example, assuming that the control unit 210 determines the number of measurement results L=4 within the coherence time and determines the upper limit Kup=4 of the additional constraint condition, it can be determined that all models in the model library of (I) of FIG. 3 meet the additional condition. In addition, the control unit 210 may also exclude those prediction models whose TP is greater than or equal to TC in the prediction model library according to the constraint condition of the prediction duration TP<TC. In this example, for example, the prediction models of the last column with F=3 and having an excessively long prediction duration TP_{F=3} are excluded, and the prediction models of the second column with F=2 are selected from the first two columns to ensure prediction efficiency. In this way, the control unit 210 selects, for example, the prediction models with F=2 and K≤4, i.e., the prediction model numbered 2, K₂=2, F₂=2, with a prediction duration TP_{F=2}, the prediction model numbered 5, K₅=3, F₅=2, with a prediction duration TP_{F=2}, and the prediction model numbered 9, K₉=4, F₉=2, with a prediction duration TP_{F=2}, as candidate prediction models.

Then, the control unit 210 can determine, based on L=4 pieces of real-time measurement information, the measurement durations TM₂, TM₃, and TM₄ of the beam measurements corresponding to the most recent K₂=2, K₅=3, or K₉=4 pieces of measurement information (for example, TM₂ can be the time from the measurement time of the penultimate piece of measurement information among the 4 pieces of real-time measurement information to the current time, and so on), and thus determine, based on the sum of each measurement duration and the prediction duration TP_{F=2}, whether the corresponding prediction model i meets the above-mentioned constraint condition based on the coherence time (TMᵢ+TP_{F=2})≤ TC.

For example, assuming that the sum of each measurement duration and the prediction duration TP_{F=2} meets the above-mentioned constraint condition (TMᵢ+TP_{F=2})≤TC, the control unit 210 may determine the prediction models numbered 2, 5, and 9 as prediction models that meet the constraint condition. For another example, if only the sum of the measurement duration TM₂ and the prediction duration TP_{F=2} meets the above-mentioned constraint condition (TMᵢ+TP_{F=2})≤TC, the control unit 210 may determine only the prediction model numbered 2 as the prediction model that meets the constraint condition. In this way, the control unit 210 may determine one or more prediction models that meet the constraint condition.

Optionally, when there are multiple prediction models in the prediction model library that meet the overall constraint condition based on the coherence time, the control unit 210 can further determine one or more models therefrom based on accuracy/efficiency considerations, such as the optimal model (for example, but not limited to the model with the highest accuracy, such as the model with the largest K among the models that meet the overall constraint condition, such as the prediction model numbered 9, K=4, F=2 in the example of (I) in FIG. 3) and the suboptimal model (for example, but not limited to the model with the highest efficiency, such as the model with the largest F among the models that meet the overall constraint condition).

Alternatively, assuming that the sum of each measurement duration TM₂, TM₃, TM₄ and the prediction duration TP_{F=2} is greater than the coherence time TC, the control unit 210 deems that the prediction models numbered 2, 5, and 9 do not meet the constraint condition TM+TP≤TC, and determines that there is no prediction model that meets the constraint condition in the prediction model library.

In the above-mentioned process of determining the model that meets the constraint condition, the control unit 210 actually determines the K and F (and optional mode information) of the prediction model that meets the condition in the prediction model library based on the constraint condition, and also determines the index of the prediction model that meets the condition in the prediction model library if the index of each prediction model is known. The control unit 200 can use the above-mentioned information as its model requirement.

Optionally, the control unit 210 of the electronic device 200 may be further configured to control the communication unit 220 to send the model requirement indicating the determined K and F (and optional mode information) and/or the determined index to the base station side device. As an example, the model requirement sent by the electronic device 200 may be carried, for example, via DCI or PDSCH.

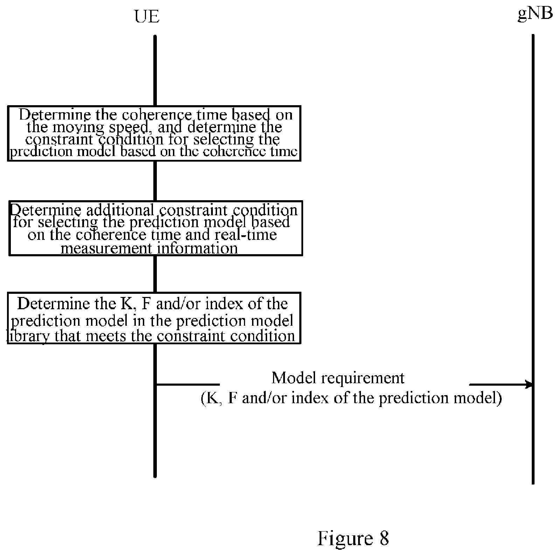

FIG. 8 illustrates a flowchart of one example signaling interaction of the process of implementing the above-mentioned model requirement determination and transmission by the electronic device on the terminal side, wherein the terminal device UE has the function of the electronic device 200, and the base station gNB serves the terminal device UE. Note that although FIG. 8 illustrates that the UE performs subsequent processing after calculating the coherence time based on the moving speed, in actual applications, the UE can, for example, re-determine the model only when the moving speed changes greatly (for example, the change in the moving speed causes a large change in the coherence time, which indicates that the channel environment has a large change), otherwise the previously determined model is used.

In addition, the control unit 210 can be further configured to use the communication unit 220 under control to receive from the base station side device one or more prediction models determined in the prediction model library based on the model requirement, or prediction information obtained based on the one or more prediction models.

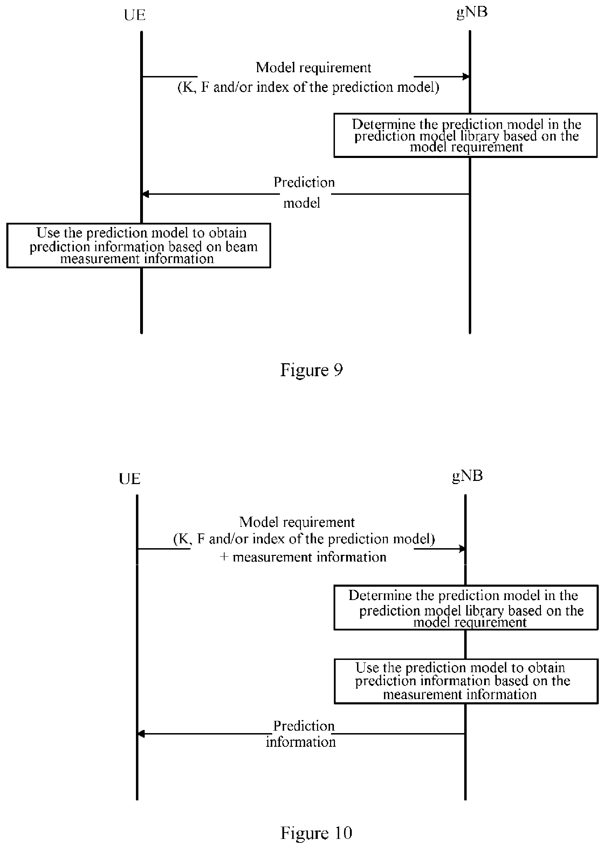

The electronic device 200 can receive different transmission contents selected by the base station side device based on the capability of the electronic device 200 as the terminal device. Next, the example signaling interaction process will be described in conjunction with FIG. 9 and FIG. 10. In FIG. 9 and FIG. 10, the terminal device UE has the function of the electronic device 200, and the base station gNB serves the terminal device UE.

In one example, when the terminal device has strong storage and/or computing capabilities, it is considered that the terminal device can carry the model and can independently perform prediction. At this time, as illustrated in the example of FIG. 9, the gNB directly sends the prediction model determined according to the model requirement reported by the UE, and the UE that receives the prediction model can perform prediction processing on its own. As an example, the gNB can determine the prediction model through coordinate transmissions by one or more of RRC, MAC CE, DCI, and/or PDSCH.

On the other hand, when the terminal device has poor storage and/or computing capabilities, it is considered that the terminal device cannot carry the model or make predictions independently. In this case, as illustrated in the example of FIG. 10, the UE reports the measurement information of the downlink beam at the same time as reporting the model requirement (or alternatively reports the measurement information subsequently), so that the gNB can directly use the prediction model, as determined by the model requirement, to make predictions based on the measurement information and thereby obtain prediction information. As an example, the UE can report the measurement information via PUCCH or PUSCH. After making the prediction, the gNB sends the prediction result (prediction information) to the UE. As an example, the gNB can carry the prediction result by adding several bits in the DCI, and/or carry the prediction result through the PDSCH.

Optionally, the control unit 210 of the electronic device 200 can be further configured to control the communication unit 220 to report the measurement information of the downlink beam to the base station side device to train the prediction model that meets the model requirement when there is no prediction model that meets the constraint condition or the model requirement in the prediction model library.

For example, one of the possible reasons why the electronic device 200 on the terminal side finds that there is no prediction model that meets the constraint condition in the prediction model library is that the parameters K, F and/or prediction duration TP of the existing prediction model in the prediction model are too large to meet the current requirement under the shorter coherence time (the sum of the measurement duration and the prediction duration is equal to the coherence time). In this case, the electronic device 200 on the terminal side may require the base station side device to retrain a model with smaller K and/or F to meet the requirement. For example, the electronic device 200 may require the base station side to try to train a new model in which K and F are smaller values such as (1,1), (1,2), (2,1) and the prediction duration TP is shorter. In this case, the control unit 210 may send a training request indicating the above requirement and measurement information of the downlink beam to the base station side device to request the base station side device to use the measurement information as training data to train the prediction model that meets the constraint condition based on the request.

For example, one of the possible reasons why the base station side device finds that there is no prediction model in the prediction model library that meets the model requirement of the electronic device 200 on the terminal side is that the information about the prediction model library in the storage unit 230 of the electronic device 200 on the terminal side is not updated in time. For example, the base station side has deleted some models that have not been used for a long time, resulting in no prediction model having (K, F) or corresponding to the index. In this case, the electronic device 200 on the terminal side can, for example, report the measurement information of the downlink beam to the base station side device based on the training data reporting notification on the base station side, so as to train the prediction model that meets the parameters (K, F and optional prediction duration, etc.) specified by the model requirement.

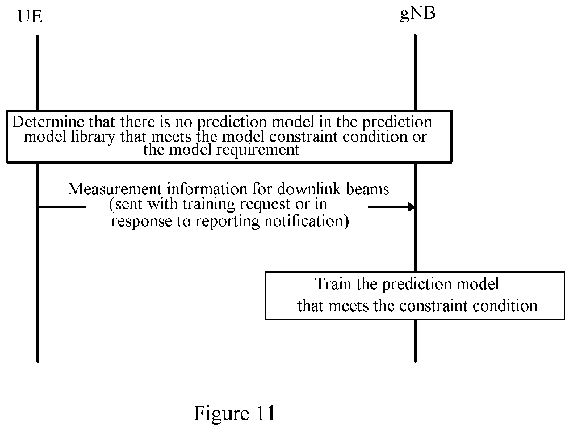

Next, one example signaling interaction process in this case will be described in conjunction with FIG. 11. FIG. 11 is a flowchart of an example signaling interaction for illustrating the prediction model training data reporting process implemented in the electronic device on the terminal side. In the example of FIG. 11, the terminal device UE has the function of the electronic device 200, and the base station gNB serves the terminal device UE. In this example, for example, the terminal side device UE determines that there is no prediction model that meets the constraint condition through a process similar to the process for determining a model that meets the constraint condition in FIG. 8, or the base station side device gNB finds that there is no prediction model that meets the model requirement of the terminal device in the prediction model library, thereby causing the model training process illustrated in FIG. 11.

In the example of FIG. 11, when it is found by the UE side that there is no prediction model that meets the constraint condition, the UE may actively send a training request and simultaneously send measurement information of the downlink beam. In this case, the training request may include (K, F) of the desired model and optionally the prediction duration TP, and the measurement information may include the measurement result including time information. Alternatively, when it is found by the gNB side that there is no prediction model that meets the model requirement of the UE, the UE may send the measurement information of the downlink beam in response to the training data reporting notification of the gNB. In this case, the training data reporting notification of the gNB may simply require the UE to report the measurement result including the time information so that the gNB selects the measurement information that meets the model requirement as the training data, which will not be described in detail here..

In one alternative example, the control unit 210 of the electronic device 200 may be further configured to use, when there is no prediction model that meets the constraint condition in the prediction model library, another prediction model in the prediction model library as the determined prediction model. For example, at this time, the prediction model closest to the constraint condition can be selected from the existing prediction models, such as one or more prediction models with the smallest sum of the measurement duration and the prediction duration, and the K, F and index of the prediction model are determined, and then the model requirement indicating the K and F determined at this time and/or the determined index is sent to the base station side device, and then the base station side performs corresponding processing.

In another alternative example, when the device at the base station side finds that there is no model requirement that meets the requirement of the electronic device 200, another prediction model in the prediction model library can be used as the determined prediction model. For example, at this time, the prediction model closest to the model requirement can be selected from the existing prediction models, such as the prediction model whose sum of K and F is closest to the sum of F and K of the model requirement, or the prediction model whose index is closest to the index of the model requirement, and then the determined model or the prediction information obtained by using the model is sent to the electronic device 200, so that the electronic device can still obtain the prediction model or prediction information that meets the requirement to a certain extent.

The example signaling processes of the above two alternative examples can be similar to that of FIG. 8 and that of FIG. 9 to FIG. 10, respectively, and the only difference is that the prediction model that fully meets the constraint condition or model requirement is not determined, for instance, but the prediction model that is closest to meeting the constraint condition or model requirement is selected as the determined prediction model. The configuration of this alternative example is suitable for situations where there are not enough resources for training/it is time sensitive and not preferred to wait for the training process, etc.

### (Example processing when the electronic device has deployed the prediction model)

Next, consider the case where the electronic device 200 is implemented as the terminal device and the prediction model is deployed in itself. In this case, for example, the storage unit of the electronic device 200 itself stores the prediction model library, which includes a plurality of pre-trained prediction models, for example, with different modes (the continuous mode or the discrete mode) and/or different parameter values of K and F, such as the prediction model library illustrated in FIG. 3.

In this case, the control unit 210 of the electronic device 200 can obtain the moving speed obtained through the measurement by the electronic device 200 itself as the terminal device, calculate the coherence time accordingly based on the obtained moving speed, and determine the constraint condition for selecting the prediction model based on the coherence time, that is, the sum of the measurement duration and the prediction duration is within the coherence time. Optionally, the control unit 210 can also be configured to determine the additional constraint condition for selecting the prediction model for the terminal device based on the coherence time and the real-time measurement information for the downlink beam obtained in advance. The additional constraint condition may comprise that the K of the prediction model is less than or equal to the upper limit on the number of measurements, and the upper limit on the number of measurements Kup can be determined, for example, by the number of beam measurements L included in the real-time measurement information in the period of the coherence time traced back from the current time point, that is, the upper limit on the number Kup=L.

Optionally, the control unit 210 may be further configured to: determine the prediction model that meets the constraint condition in the prediction model library obtained in advance. At this time, the control unit 210 may directly perform beam prediction based on the measurement information using the determined prediction model.

In other words, when the electronic device 200 is implemented as the terminal device and the prediction model is deployed by itself, under normal circumstances, the electronic device 200 can determine and use the prediction model without further interaction with the base station side device, thereby simplifying the signaling interaction with the base station side. It can be understood that when the control unit 210 determines that there is no prediction model that meets the constraint condition in the prediction model library obtained in advance, it can determine the prediction model closest to the constraint condition for use. Alternatively, when the control unit 210 determines that there is no prediction model that meets the constraint condition in the prediction model library obtained in advance, it can reuse the measurement information of the latest beam measurement to train the prediction model that meets the requirement, which will not be elaborated here.

The electronic device according to an embodiment of the present disclosure has been described above, which can determine the constraint condition of the prediction model based on the coherence time of the channel, and the condition includes that the time difference between the measurement information of the earliest historical beam measurement to be used by the prediction model and the prediction information of the latest future time point to be predicted is within the coherence time. With such constraint condition, it can be ensured that the channel environment represented by the earliest measurement information is still applicable to the prediction information of the latest future time point, thereby facilitating the selection of the prediction model that can provide a more accurate prediction result.

In the description process of the electronic device of the embodiment of the present disclosure above, the example processing performed by either of the electronic device 200 implemented on the base station side and the electronic device 200 implemented in the terminal side is described. However, portions in the above two example processing can be combined or replaced with each other in appropriate circumstances. For example, the electronic device 200 implemented on the base station side can also obtain measurement information with complete time information from the terminal device, so that it can perform the processing similar to that by the electronic device 200 implemented in the terminal side (such as but not limited to, determining whether the model in the prediction model library meets the processing of the constraint condition, etc.). For another example, the electronic device 200 implemented in the terminal side can also ignore the specific time of the pieces of measurement information when making a decision and only consider their order, thereby performing the processing similar to that by the electronic device 200 implemented on the base station side.

In addition, in the description of the electronic device of the embodiment of the present disclosure above, in addition to the processing performed by the electronic device 200 implemented on the base station side and the electronic device 200 implemented on the terminal side, the device interaction between the electronic device 200 implemented on the base station side and the terminal device UE, and the interaction between the electronic device 200 implemented on the terminal side and the device gNB on the base station side (for example, but not limited to the various signaling interactions described with reference to FIG. 4 to FIG. 11) are also described. In other words, the present disclosure not only provides the electronic device capable of making decisions based on the prediction model, but also correspondingly discloses another device that interacts with the electronic device, which is also included in the present disclosure, which will not be elaborated here.

### <3. Method embodiments>

Corresponding to the above-mentioned device embodiments, the present disclosure provides the following method embodiments.

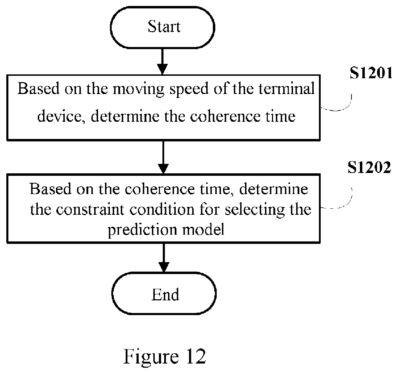

FIG. 12 is a flowchart illustrating a process example of a method for wireless communication according to an embodiment of the present disclosure.

As illustrated in FIG. 12, in step S1201, the coherence time of the channel in which the terminal device is located is determined based on the moving speed of the terminal device.

Next, in step S1202, based on the coherence time, the constraint condition for selecting the prediction model for downlink beam prediction for the terminal device is determined, wherein the prediction model determines sequential F pieces of prediction information for the downlink beam based on K pieces of measurement information obtained through sequential K beam measurements of the downlink beam on the terminal device side, wherein K and F are each a natural number greater than or equal to 1, and the constraint condition comprises that the time from the first beam measurement among the K beam measurements to the last piece of prediction information among F pieces of prediction information is less than or equal to the coherence time.

Optionally, although not illustrated in the figure, the method of one embodiment may further comprise selecting the prediction model of the continuous mode or the discrete mode, wherein the prediction model of the continuous mode is based on measurement information obtained through continuous K beam measurements, and the prediction model of the discrete mode is based on measurement beam information obtained through discontinuous K beam measurements. In one example, the selection of the prediction model of the continuous mode or the discrete mode may be performed based on the coherence time.

In one implementation, the method of this embodiment can be implemented on the base station side, and can be performed, for example, by the base station side device. At this time, the prediction model is, for example, deployed in the base station side device.

Optionally, although not illustrated in the figure, the method of one embodiment may also comprise receiving information about the moving speed reported by the terminal device.

Optionally, although not illustrated in the figure, the method of one embodiment may also comprise determining the additional constraint condition for selecting the prediction model for the terminal device based on the moving speed or the coherence time and pre-acquired historical measurement information for the downlink beam, wherein the additional constraint condition comprises that K of the prediction model is less than or equal to the upper limit on the number of measurements, and the upper limit on the number of measurements is determined based on the number of beam measurements included in the historical measurement information corresponding to the moving speed or the coherence time.

Optionally, although not illustrated in the figure, the method of one embodiment may further comprise determining the prediction model that meets the constraint condition in the prediction model library obtained in advance. Optionally, the determined one or more prediction models or prediction information obtained based on the one or more prediction models may also be sent to the terminal device.

Optionally, although not illustrated in the figure, the method of one embodiment may also comprise using, when there is no prediction model that meets the constraint condition in the prediction model library, another prediction model in the prediction model library as the determined prediction model; or notifying, when there is no prediction model that meets the constraint condition in the prediction model library, the terminal device to report the measurement information of the downlink beam to train the prediction model that meets the constraint condition.

In another implementation, the method of this embodiment can be implemented on the terminal device side, and can be executed, for example, by the terminal device. At this point, first consider the implementation in which the prediction model is, for example, deployed in the base station side device, while the terminal device is aware of the key parameters or information of the prediction model in the prediction model library.

Optionally, although not illustrated in the figure, the method of an embodiment may also comprise determining the K and F of the prediction model in the prediction model library based on the constraint condition, or determining the index of the prediction model in the prediction model library, and sending the model requirement indicating the determined K and F and/or the determined index to the base station side device.

Optionally, although not illustrated in the figure, the method of an embodiment may also comprise receiving, from the base station side device, one or more prediction models determined in the prediction model library based on the model requirement or prediction information obtained based on the one or more prediction models.

Optionally, in one example, when there is no prediction model in the prediction model library that meets the constraint condition or the model requirement, another prediction model in the prediction model library can be used as the determined prediction model. Alternatively, when there is no prediction model in the prediction model library that meets the constraint condition or the model requirement, the measurement information of the downlink beam can be reported to the base station side device to train the prediction model that meets the model requirement.

For an implementation such as the method described in FIG. 12 that is implemented on the terminal device side and executed by the terminal device, an implementation in which the prediction model is deployed in the prediction model library, but the terminal device knows the key parameters or information of the prediction model in the prediction model library can also be considered. In this case, although not illustrated in the figure, the method of one embodiment can also comprise that determining the prediction model that meets the constraint condition in the prediction model library obtained in advance.

According to an embodiment of the present disclosure, the subject that executes the above method may be the electronic device 200 according to an embodiment of the present disclosure, and therefore all the embodiments of the electronic device 200 in the foregoing text are applicable thereto.

### < 4. Application examples >

The technology according to the present disclosure may be applicable to various products.

For example, when the electronic device is implemented on the base station side, the electronic device may be implemented as various base stations, such as a macro eNB and a small eNB, and may be implemented as any type of gNB (a base station in a 5G system). The small eNB may be an eNB, such as a pico eNB, a micro eNB, and a home (femto) eNB, which covers a cell smaller than a macro cell. Alternatively, the base station may be implemented as any other type of base station, such as a NodeB and a base transceiver station (BTS). The base station may include: a body (which is also referred to as a base station device) configured to control wireless communication, and one or more remote wireless heads (RRHs) arranged in a different place from the body.

In addition, the electronic device on the base station side may further be implemented as various TRPs. The TRPs may have transmitting and receiving functions, such as receiving information from a user equipment and a base station device and transmitting information to a user equipment and a base station device. In a typical example, the TRPs may provide services to a user equipment and is controlled by a base station device. Furthermore, the TRPs may have a structure similar to the structure of the base station device, or the TRPs may only have a structure related to transmitting and receiving information in the base station device.

When the electronic device is implemented on the terminal device side, the electronic device may be various types of user devices, which may be implemented as the terminal device (such as a smart phone, a tablet personal computer (PC), a notebook PC, a portable game terminal, a portable/dongle type mobile router, and a digital camera) or a vehicle-mounted terminal (such as an automobile navigation device). The user equipment may also be implemented as a terminal (also referred to as a machine type communication (MTC) terminal) that performs machine-to-machine (M2M) communication. In addition, the user equipment may be a wireless communication module (such as an integrated circuit module including a single chip) installed on each of the above-mentioned user equipments.

### [Application examples of a base station]

### ( First application example )

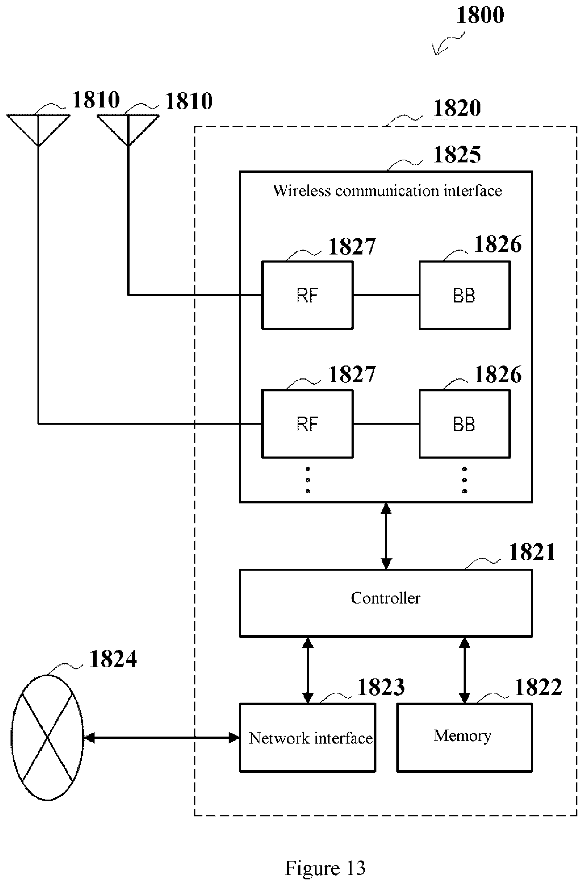

FIG. 13 is a block diagram illustrating a first example of a schematic configuration of an eNB to which the technology of the present disclosure may be applied. An eNB 1800 includes one or more antennas 1810 and a base station device 1820. The base station device 1820 and each of the antennas 1810 may be connected to each other via an RF cable.

Each of the antennas 1810 includes a single or multiple antenna elements (such as multiple antenna elements included in a multiple-input multiple-output (MIMO) antenna), and is used for the base station device 1820 to transmit and receive wireless signals. As illustrated in FIG. 13, the eNB 1800 may include multiple antennas 1810. For example, the multiple antennas 1810 may be compatible with multiple frequency bands used by the eNB 1800. Although FIG. 13 illustrates an example in which the eNB 1800 includes multiple antennas 1810, the eNB 1800 may also include a single antenna 1810.

The base station device 1820 includes a controller 1821, a memory 1822, a network interface 1823, and a wireless communication interface 1825.

The controller 1821 may be, for example, a CPU or a DSP, and manipulate various functions of a higher layer of the base station device 1820. For example, the controller 1821 generates a data packet based on data in a signal processed by the wireless communication interface 1825, and transmits the generated packet via the network interface 1823. The controller 1821 may bundle data from multiple baseband processors to generate a bundled packet, and transfer the generated bundled packet. The controller 1821 may have a logical function for performing control such as radio resource control, radio bearer control, mobility management, admission control, and scheduling. This control may be executed in conjunction with nearby eNBs or core network nodes. The memory 1822 includes an RAM and an ROM, and stores programs executed by the controller 1821 and various types of control data (such as a terminal list, transmission power data, and scheduling data).

The network interface 1823 is a communication interface for connecting the base station device 1820 to a core network 1824. The controller 1821 may communicate with a core network node or another eNB via the network interface 1823. In this case, the eNB 1800 and the core network node or other eNBs may be connected to each other through a logical interface (such as an S1 interface and an X2 interface). The network interface 1823 may also be a wired communication interface, or a wireless communication interface for a wireless backhaul line. If the network interface 1823 is a wireless communication interface, the network interface 1823 may use a higher frequency band for wireless communication than the frequency band used by the wireless communication interface 1825.

The wireless communication interface 1825 supports any cellular communication scheme (such as Long Term Evolution (LTE) and LTE-Advanced), and provides wireless connection to a terminal located in a cell of the eNB 1800 via an antenna 1810. The wireless communication interface 1825 may generally include, for example, a baseband (BB) processor 1826 and an RF circuit 1827. The BB processor 1826 may perform, for example, encoding/decoding, modulation/demodulation, and multiplexing/demultiplexing, and perform various types of signal processing of layers (such as L1, medium access control (MAC), radio link control (RLC), and packet data convergence protocol ( PDCP)). Instead of the controller 1821, the BB processor 1826 may have a part or all of the above-mentioned logical functions. The BB processor 1826 may be a memory storing a communication control program, or a module including a processor and related circuits configured to execute the program. The function of the BB processor 1826 may be changed by updating the program. The module may be a card or a blade inserted into a slot of the base station device 1820. Alternatively, the module may be a chip mounted on a card or blade. Meanwhile, the RF circuit 1827 may include, for example, a mixer, a filter, and an amplifier, and transmit and receive a wireless signal via the antenna 1810.

As illustrated in FIG. 13, the wireless communication interface 1825 may include multiple BB processors 1826. For example, the multiple BB processors 1826 may be compatible with multiple frequency bands used by the eNB 1800. As illustrated in FIG. 13, the wireless communication interface 1825 may include multiple RF circuits 1827. For example, the multiple RF circuits 1827 may be compatible with multiple antenna elements. Although FIG. 13 illustrates an example in which the wireless communication interface 1825 includes multiple BB processors 1826 and multiple RF circuits 1827, the wireless communication interface 1825 may also include a single BB processor 1826 or a single RF circuit 1827.

In the eNB 1800 illustrated in FIG. 13, the communication unit in the electronic device 200 described above with reference to FIG. 2 may be implemented through the wireless communication interface 1825 and the optional antenna 1810. The function of the control unit in the electronic device 200 may be implemented through the controller 1821. For example, the controller 1821 may implement the function of the control unit by executing instructions stored in the memory 1822. The function of the storage unit in the electronic device 200 may be implemented through the memory 1822.

### ( Second application example )

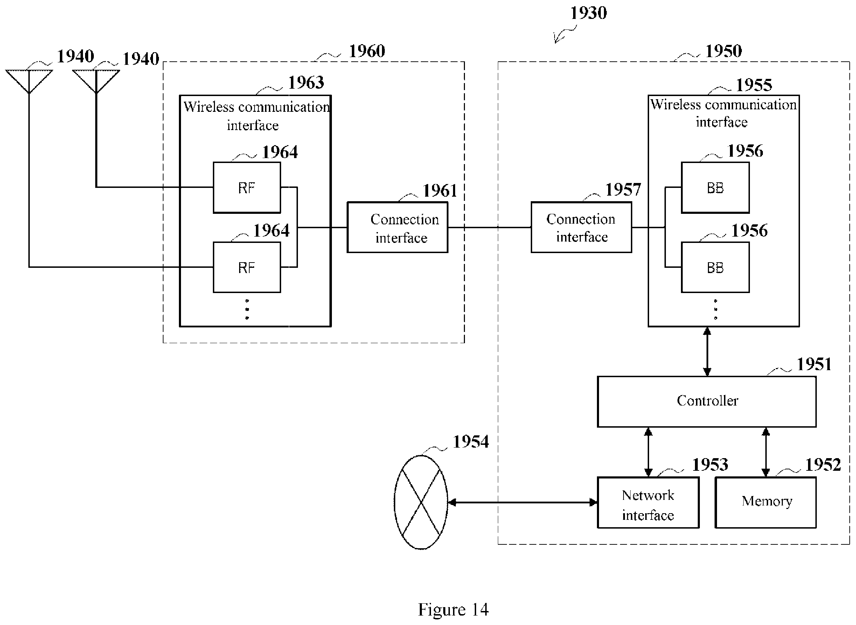

FIG. 14 is a block diagram illustrating a second example of a schematic configuration of an eNB to which the technology of the present disclosure may be applied. An eNB 1930 includes one or more antennas 1940, a base station device 1950, and an RRH 1960. The RRH 1960 and each antenna 1940 may be connected to each other via an RF cable. The base station device 1950 and the RRH 1960 may be connected to each other via a high-speed line such as an optical fiber cable.

Each of the antennas 1940 includes a single or multiple antenna elements (such as multiple antenna elements included in a MIMO antenna) and is used for the RRH 1960 to transmit and receive a wireless signal. As illustrated in FIG. 14, the eNB 1930 may include multiple antennas 1940. For example, the multiple antennas 1940 may be compatible with multiple frequency bands used by the eNB 1930. Although FIG. 14 illustrates an example in which the eNB 1930 includes multiple antennas 1940, the eNB 1930 may also include a single antenna 1940.

The base station device 1950 includes a controller 1951, a memory 1952, a network interface 1953, a wireless communication interface 1955, and a connection interface 1957. The controller 1951, the memory 1952, and the network interface 1953 are the same as the controller 1821, the memory 1822, and the network interface 1823 as described with reference to FIG. 13.

The wireless communication interface 1955 supports any cellular communication scheme (such as LTE and LTE-Advanced), and provides wireless communication to a terminal located in a sector corresponding to the RRH 1960 via the RRH 1960 and the antenna 1940. The wireless communication interface 1955 may generally include, for example, a BB processor 1956. The BB processor 1956 is the same as the BB processor 1826 described with reference to FIG. 13 except that the BB processor 1956 is connected to the RF circuit 1964 of the RRH 1960 via the connection interface 1957. As illustrated in FIG. 14, the wireless communication interface 1955 may include multiple BB processors 1956. For example, the multiple BB processors 1956 may be compatible with multiple frequency bands used by the eNB 1930. Although FIG. 14 illustrates an example in which the wireless communication interface 1955 includes multiple BB processors 1956, the wireless communication interface 1955 may also include a single BB processor 1956.

The connection interface 1957 is an interface for connecting the base station device 1950 (wireless communication interface 1955) to the RRH 1960. The connection interface 1957 may also be a communication module for communication in the above-mentioned high-speed line that connects the RRH 1960 to the base station device 1950 (wireless communication interface 1955).

The RRH 1960 includes a connection interface 1961 and a wireless communication interface 1963.

The connection interface 1961 is an interface for connecting the RRH 1960 (wireless communication interface 1963) to the base station device 1950. The connection interface 1961 may also be a communication module for communication in the above-mentioned high-speed line.

The wireless communication interface 1963 transmits and receives wireless signals via the antenna 1940. The wireless communication interface 1963 may generally include, for example, an RF circuit 1964. The RF circuit 1964 may include, for example, a mixer, a filter, and an amplifier, and transmit and receive wireless signals via the antenna 1940. As illustrated in FIG. 14, the wireless communication interface 1963 may include multiple RF circuits 1964. For example, the multiple RF circuits 1964 may support multiple antenna elements. Although FIG. 14 illustrates an example in which the wireless communication interface 1963 includes multiple RF circuits 1964, the wireless communication interface 1963 may also include a single RF circuit 1964.

In the eNB 1930 illustrated in FIG. 14, the communication unit in the electronic device 200 described above with reference to FIG. 2 may be implemented, for example, by the wireless communication interface 1963 and the optional antenna 1940. The function of the control unit in the electronic device 200 may be implemented by the controller 1951. For example, the controller 1951 may implement the function of the control unit by executing instructions stored in the memory 1952. The function of the storage unit in the electronic device 200 may be implemented by the memory 1952.

### [ Application examples of a user equipment ]

### ( First application example )

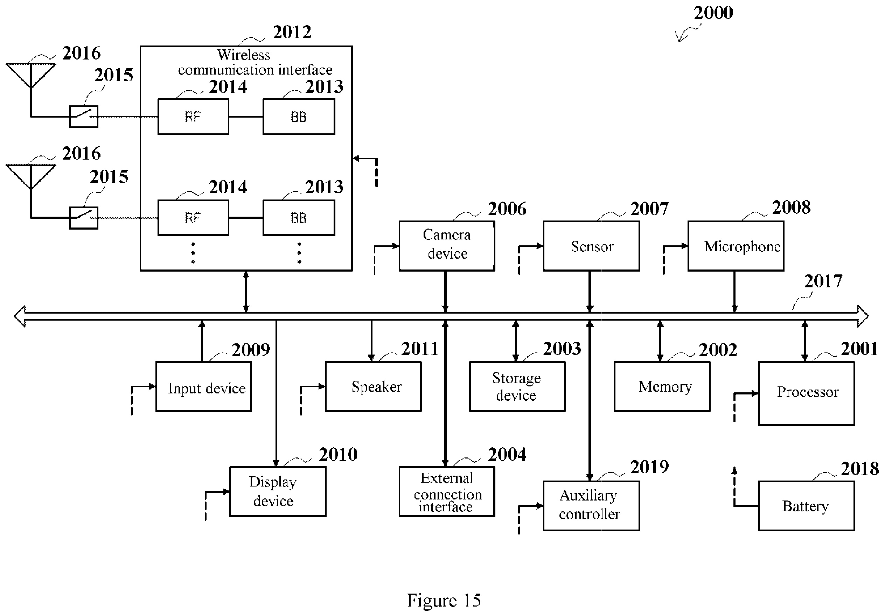

FIG. 15 is a block diagram illustrating an example of a schematic configuration of a smart phone 2000 to which the technology of the present disclosure may be applied. The smart phone 2000 includes a processor 2001, a memory 2002, a storage device 2003, an external connection interface 2004, a camera device 2006, a sensor 2007, a microphone 2008, an input device 2009, a display device 2010, a speaker 2011, a wireless communication interface 2012, one or more antenna switches 2015, one or more antennas 2016, a bus 2017, a battery 2018, and an auxiliary controller 2019.

The processor 2001 may be, for example, a CPU or a system on a chip (SoC), and controls the functions of the application layer and other layers of the smart phone 2000. The memory 2002 includes an RAM and an ROM, and stores data and programs executed by the processor 2001. The storage device 2003 may include a storage medium such as a semiconductor memory and a hard disk. The external connection interface 2004 is an interface for connecting an external device (such as a memory card and a universal serial bus (USB) device) to the smart phone 2000.

The camera device 2006 includes an image sensor (such as a charge coupled device (CCD) and a complementary metal oxide semiconductor (CMOS)), and generates a captured image. The sensor 2007 may include a group of sensors, such as a measurement sensor, a gyroscope sensor, a geomagnetic sensor, and an acceleration sensor. The microphone 2008 converts sound inputted to the smart phone 2000 into an audio signal. The input device 2009 includes, for example, a touch sensor, a keypad, a keyboard, a button, or a switch configured to detect a touch on a screen of the display device 2010, and receives an operation or information input from a user. The display device 2010 includes a screen (such as a liquid crystal display (LCD) and an organic light emitting diode (OLED) display), and displays an output image of the smart phone 2000. The speaker 2011 converts an audio signal outputted from the smart phone 2000 into sound.

The wireless communication interface 2012 supports any cellular communication scheme (such as LTE and LTE-Advanced), and performs wireless communication. The wireless communication interface 2012 may generally include, for example, a BB processor 2013 and an RF circuit 2014. The BB processor 2013 may perform, for example, encoding/decoding, modulation/demodulation, and multiplexing/demultiplexing, and perform various types of signal processing for wireless communication. Further, the RF circuit 2014 may include, for example, a mixer, a filter, and an amplifier, and transmit and receive wireless signals via the antenna 2016. The wireless communication interface 2012 may be a chip module on which the BB processor 2013 and the RF circuit 2014 are integrated. As illustrated in FIG. 15, the wireless communication interface 2012 may include multiple BB processors 2013 and multiple RF circuits 2014. Although FIG. 15 illustrates an example in which the wireless communication interface 2012 includes multiple BB processors 2013 and multiple RF circuits 2014, the wireless communication interface 2012 may also include a single BB processor 2013 or a single RF circuit 2014.

In addition to the cellular communication scheme, the wireless communication interface 2012 may support another type of wireless communication scheme, such as a short-range wireless communication scheme, a near field communication scheme, and a wireless local area network (LAN) scheme. In this case, the wireless communication interface 2012 may include a BB processor 2013 and an RF circuit 2014 for each wireless communication scheme.

Each of the antenna switches 2015 switches a connection destination of the antenna 916 among multiple circuits included in the wireless communication interface 2012 (for example, circuits for different wireless communication schemes).

Each of the antennas 2016 includes a single or multiple antenna elements (such as multiple antenna elements included in a MIMO antenna), and is used for the wireless communication interface 2012 to transmit and receive wireless signals. As illustrated in FIG. 15, the smart phone 2000 may include multiple antennas 2016. Although FIG. 15 illustrates an example in which the smart phone 2000 includes multiple antennas 2016, the smart phone 2000 may also include a single antenna 2016.

In addition, the smart phone 2000 may include an antenna 2016 for each wireless communication scheme. In this case, the antenna switch 2015 may be omitted from the configuration of the smart phone 2000.

The processor 2001, the memory 2002, the storage device 2003, the external connection interface 2004, the camera device 2006, the sensor 2007, the microphone 2008, the input device 2009, the display device 2010, the speaker 2011, the wireless communication interface 2012, and the auxiliary controller 2019 are connected to each other via the bus 2017. The battery 2018 supplies power to each block of the smart phone 2000 illustrated in FIG. 15 via a feeder line, and the feeder line is partially illustrated as a dashed line in the figure. The auxiliary controller 2019, for example, operates the least necessary function of the smart phone 2000 in the sleep mode.

In the smart phone 2000 illustrated in FIG. 15, the communication unit in the electronic device 200 described above with reference to FIG. 2 may be implemented by the wireless communication interface 2012 and the optional antenna 2016. The function of the control unit in the electronic device 200 may be implemented by the processor 2001 or the auxiliary controller 2019. For example, the processor 2001 or the auxiliary controller 2019 may implement the function of the control unit by executing instructions stored in the memory 2002 or the storage device 2003. The function of the storage unit in the electronic device 200 may be implemented by the memory 2002 or the storage device 2003.

### ( Second application example )

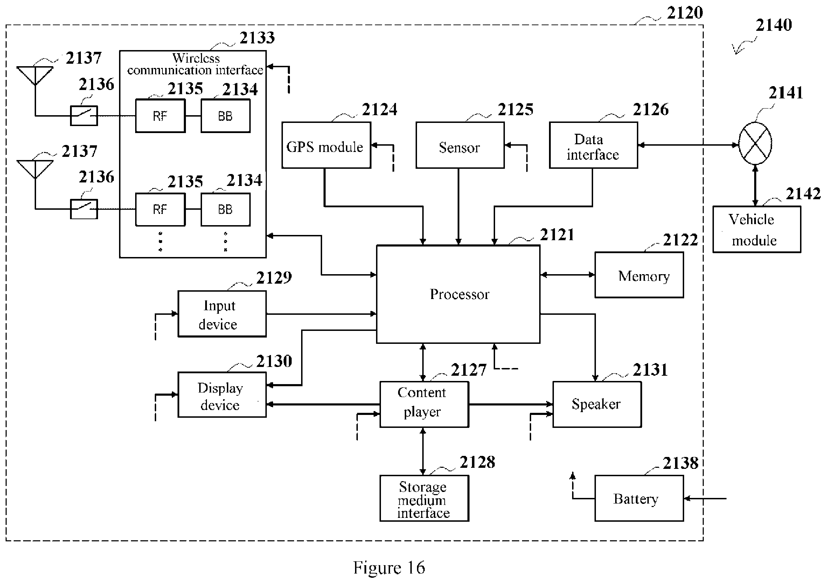

FIG. 16 is a block diagram illustrating an example of a schematic configuration of a vehicle navigation device 2120 to which the technology according to the present disclosure may be applied. The vehicle navigation device 2120 includes a processor 2121, a memory 2122, a global positioning system (GPS) module 2124, a sensor 2125, a data interface 2126, a content player 2127, a storage medium interface 2128, an input device 2129, a display device 2130, a speaker 2131, a wireless communication interface 2133, one or more antenna switches 2136, one or more antennas 2137, and a battery 2138.

The processor 2121 may be, for example, a CPU or a SoC, and controls the navigation function of the vehicle navigation device 2120 and other functions. The memory 2122 includes an RAM and an ROM, and stores data and programs executed by the processor 2121.

The GPS module 2124 measures a position (such as latitude, longitude, and altitude) of the vehicle navigation device 2120 based on a GPS signal received from a GPS satellite. The sensor 2125 may include a group of sensors, such as a gyroscope sensor, a geomagnetic sensor, and an air pressure sensor. The data interface 2126 is connected to, for example, an in-vehicle network 2141 via a terminal not illustrated, and acquires data (such as vehicle speed data) generated by the vehicle.

The content player 2127 reproduces content stored in a storage medium (such as CD and a DVD), which is inserted into the storage medium interface 2128. The input device 2129 includes, for example, a touch sensor, a button, or a switch configured to detect a touch on a screen of the display device 2130, and receives an operation or information input from the user. The display device 2130 includes a screen such as an LCD or OLED display, and displays an image of a navigation function or reproduced content. The speaker 2131 outputs the sound of the navigation function or the reproduced content.

The wireless communication interface 2133 supports any cellular communication scheme (such as LTE and LTE-Advanced), and performs wireless communication. The wireless communication interface 2133 may generally include, for example, a BB processor 2134 and an RF circuit 2135. The BB processor 2134 may perform, for example, encoding/decoding, modulation/demodulation, and multiplexing/demultiplexing, and perform various types of signal processing for wireless communication. Further, the RF circuit 2135 may include, for example, a mixer, a filter, and an amplifier, and transmit and receive wireless signals via the antenna 2137. The wireless communication interface 2133 may also be a chip module on which the BB processor 2134 and the RF circuit 2135 are integrated. As illustrated in FIG. 16, the wireless communication interface 2133 may include multiple BB processors 2134 and multiple RF circuits 2135. Although FIG. 16 illustrates an example in which the wireless communication interface 2133 includes multiple BB processors 2134 and multiple RF circuits 2135, the wireless communication interface 2133 may also include a single BB processor 2134 or a single RF circuit 2135.

In addition to the cellular communication scheme, the wireless communication interface 2133 may support other types of wireless communication schemes, such as a short-range wireless communication scheme, a near field communication scheme, and a wireless LAN scheme. In this case, the wireless communication interface 2133 may include a BB processor 2134 and an RF circuit 2135 for each wireless communication scheme.

Each of the antenna switches 2136 switches a connection destination of the antenna 2137 among multiple circuits included in the wireless communication interface 2133 (such as, circuits for different wireless communication schemes).

Each of the antennas 2137 includes a single or multiple antenna elements (such as multiple antenna elements included in a MIMO antenna), and is used for the wireless communication interface 2133 to transmit and receive wireless signals. As illustrated in FIG. 16, the vehicle navigation device 2120 may include multiple antennas 2137. Although FIG. 16 illustrates an example in which the vehicle navigation device 2120 includes multiple antennas 2137, the vehicle navigation device 2120 may also include a single antenna 2137.

In addition, the vehicle navigation device 2120 may include an antenna 2137 for each wireless communication scheme. In this case, the antenna switch 2136 may be omitted from the configuration of the vehicle navigation device 2120.

The battery 2138 supplies power to each block of the vehicle navigation device 2120 as illustrated in FIG. 16 via a feeder line, and the feeder line is partially illustrated as a dashed line in the figure. The battery 2138 accumulates electric power supplied from the vehicle.

In the vehicle navigation device 2120 illustrated in FIG. 16, the communication unit in the electronic device 200 described above with reference to FIG. 2 can be implemented by the wireless communication interface 2133 and the optional antenna 2137. The function of the control unit in the electronic device 200 can be implemented by thee processor 2121. For example, the processor 2121 can implement the function of the control unit by executing instructions stored in the memory 2122. The function of the storage unit in the electronic device 200 can be implemented by the memory 2122.

The technology of the present disclosure may also be implemented as an in-vehicle system (or vehicle) 2140 including one or more blocks in a vehicle navigation device 2120, the in-vehicle network 2141, and the vehicle module 2142. The vehicle module 2142 generates vehicle data (such as vehicle speed, engine speed, and failure information), and outputs the generated data to the in-vehicle network 2141.

The preferred embodiments of the present disclosure have been described above with reference to the accompanying drawings. Apparently, the present disclosure is not limited to the above embodiments. Those skilled in the art may obtain various changes and modifications within the scope of the appended claims, and it should be understood that these changes and modifications are fall within the technical scope of the present disclosure.

For example, the units illustrated in dashed boxes in the functional block diagrams illustrated in the drawings indicate that the functional units are optional in the corresponding device, and the various optional functional units may be combined in an appropriate manner to perform required functions.

For example, the functions included in one unit according to the above embodiments may be realized by separate devices. Alternatively, the functions implemented by multiple units in the above embodiments may be implemented by separate devices, respectively. In addition, one of the above functions may be implemented by multiple units. It should be understood that the above configurations are included in the technical scope of the present disclosure.

In this specification, the steps described in the flowchart may be performed in the chronological order described herein, and may be performed in parallel or independently rather than necessarily in the chronological order. In addition, the chronological order in which the steps are performed may be changed appropriately.

In addition, the present disclosure may have the following configurations.
1. An electronic device, comprising:
   processing circuitry, configured to:
   determine a coherence time of a channel in which a terminal device is located, based on a moving speed of the terminal device; and
   determine, based on the coherence time, a constraint condition for selecting a prediction model for downlink beam prediction for the terminal device, wherein the prediction model determines, based on K pieces of measurement information obtained through sequential K beam measurements for a downlink beam by a terminal device side, sequential F pieces of prediction information for the downlink beam, wherein K and F are each a natural number greater than or equal to 1,
   wherein the constraint condition comprises that the time from the time of the first beam measurement among the K beam measurements to the time of the last piece of prediction information among the F pieces of prediction information is less than or equal to the coherence time.
2. The electronic device according to configuration 1, wherein the processing circuitry is further configured to:
   select the prediction model of a continuous mode or a discrete mode, wherein the prediction model of the continuous mode is based on measurement information obtained through continuous K beam measurements, and the prediction model of the discrete mode is based on measurement beam information obtained through discontinuous K beam measurements.
3. The electronic device according to configuration 2, wherein the processing circuitry is further configured to:
   select, based on the coherence time, the prediction model of the continuous mode or the prediction model of the discrete mode.
4. The electronic device according to configuration 1, wherein the electronic device is a base station side device.
5. The electronic device according to configuration 4, wherein the processing circuitry is further configured to:
   receive information about the moving speed reported by the terminal device.
6. The electronic device according to configuration 4, wherein the processing circuitry is further configured to: determine an additional constraint condition for selecting the prediction model for the terminal device, based on the moving speed or the coherence time and pre-acquired historical measurement information for the downlink beam,
   wherein the additional constraint condition comprises that K of the prediction model is less than or equal to an upper limit on the number of measurements, and the upper limit on the number of measurements is determined according to the number of beam measurements included in the historical measurement information corresponding to the moving speed or the coherence time.
7. The electronic device according to configuration 4, wherein the processing circuitry is further configured to:
   determine, in a pre-acquired prediction model library, the prediction model that meets the constraint condition.
8. The electronic device according to configuration 7, wherein the processing circuitry is further configured to:
   send the determined one or more prediction models or prediction information derived based on the one or more prediction models to the terminal device.
9. The electronic device according to configuration 8, wherein the processing circuitry is further configured to take, when there is no prediction model in the prediction model library that meets the constraint condition, another prediction model in the prediction model library as the determined prediction model.
10. The electronic device according to configuration 8, wherein the processing circuitry is further configured to instruct, when there is no prediction model in the prediction model library that meets the constraint condition, the terminal device to report measurement information of the downlink beam so as to train the prediction model that meets the constraint condition.
11. The electronic device according to configuration 1, wherein the electronic device is the terminal device.
12. The electronic device according to configuration 11, wherein the processing circuitry is further configured to:
   determine K and F of the prediction model in the prediction model library based on the constraint condition, or determine an index of the prediction model in the prediction model library; and
   send a model requirement indicating the determined K and F and/or the determined index to the base station side device .
13. The electronic device according to configuration 12, wherein the processing circuitry is further configured to:
   receive, from the base station side device, one or more prediction models determined in the prediction model library based on the model requirement, or prediction information derived from the one or more prediction models.
14. The electronic device according to configuration 13, wherein when there is no prediction model in the prediction model library that meets the constraint condition or the model requirement, another prediction model in the prediction model library is taken as the determined prediction model.
15. The electronic device according to configuration 13, wherein the processing circuitry is further configured to: when there is no prediction model in the prediction model library that meets the constraint condition or the model requirement, report the measurement information of the downlink beam to the base station side device so as to train the prediction model that meets the constraint condition or the model requirement.
16. The electronic device according to configuration 4 or 11, wherein the prediction model is deployed on the base station side device.
17. The electronic device according to configuration 11, wherein the processing circuitry is further configured to:
   determine, in a pre-acquired prediction model library, the prediction model that meets the constraint condition.
18. The electronic device according to configuration 17, wherein the prediction model is deployed in the terminal device.
19. A method for wireless communication, comprising:
   determining a coherence time of a channel in which a terminal device is located, based on a moving speed of the terminal device; and
   determine, based on the coherence time, a constraint condition for selecting a prediction model for downlink beam prediction for the terminal device, wherein the prediction model determines, based on K pieces of measurement information obtained through sequential K beam measurements for a downlink beam by a terminal device side, sequential F pieces of prediction information for the downlink beam, wherein K and F are each a natural number greater than or equal to 1,
   wherein the constraint condition comprises that the time from the time of the first beam measurement among the K beam measurements to the time of the last piece of prediction information among F pieces of prediction information is less than or equal to the coherence time.
20. A non-transitory computer-readable storage medium having executable instructions stored thereon, wherein when executed by a processor, the executable instructions cause the processor to perform the method for wireless communication according to configuration 19.

Although the embodiments of the present disclosure have been described above in detail in connection with the drawings, it should be appreciated that the embodiments described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1. An electronic device, comprising:
processing circuitry, configured to:
determine a coherence time of a channel in which a terminal device is located, based on a moving speed of the terminal device; and
determine, based on the coherence time, a constraint condition for selecting a prediction model for downlink beam prediction for the terminal device, wherein the prediction model determines, based on K pieces of measurement information obtained through sequential K beam measurements for a downlink beam by a terminal device side, sequential F pieces of prediction information for the downlink beam, wherein K and F are each a natural number greater than or equal to 1,
wherein the constraint condition comprises that the time from the time of the first beam measurement among the K beam measurements to the time of the last piece of prediction information among the F pieces of prediction information is less than or equal to the coherence time.

2. The electronic device according to claim 1, wherein the processing circuitry is further configured to:
select the prediction model of a continuous mode or a discrete mode, wherein the prediction model of the continuous mode is based on measurement information obtained through continuous K beam measurements, and the prediction model of the discrete mode is based on measurement beam information obtained through discontinuous K beam measurements.

3. The electronic device according to claim 2, wherein the processing circuitry is further configured to:
select, based on the coherence time, the prediction model of the continuous mode or the prediction model of the discrete mode.

4. The electronic device according to claim 1, wherein the electronic device is a base station side device.

5. The electronic device according to claim 4, wherein the processing circuitry is further configured to:
receive information about the moving speed reported by the terminal device.

6. The electronic device according to claim 4, wherein the processing circuitry is further configured to: determine an additional constraint condition for selecting the prediction model for the terminal device, based on the moving speed or the coherence time and pre-acquired historical measurement information for the downlink beam,
wherein the additional constraint condition comprises that K of the prediction model is less than or equal to an upper limit on the number of measurements, and the upper limit on the number of measurements is determined according to the number of beam measurements included in the historical measurement information corresponding to the moving speed or the coherence time.

7. The electronic device according to claim 4, wherein the processing circuitry is further configured to:
determine, in a pre-acquired prediction model library, the prediction model that meets the constraint condition.

8. The electronic device according to claim 7, wherein the processing circuitry is further configured to:
send the determined one or more prediction models or prediction information derived based on the one or more prediction models to the terminal device.

9. The electronic device according to claim 8, wherein the processing circuitry is further configured to take, when there is no prediction model in the prediction model library that meets the constraint condition, another prediction model in the prediction model library as the determined prediction model.

10. The electronic device according to claim 8, wherein the processing circuitry is further configured to instruct, when there is no prediction model in the prediction model library that meets the constraint condition, the terminal device to report measurement information of the downlink beam so as to train the prediction model that meets the constraint condition.

11. The electronic device according to claim 1, wherein the electronic device is the terminal device.

12. The electronic device according to claim 11, wherein the processing circuitry is further configured to:
determine K and F of the prediction model in the prediction model library based on the constraint condition, or determine an index of the prediction model in the prediction model library; and
send a model requirement indicating the determined K and F and/or the determined index to the base station side device.

13. The electronic device according to claim 12, wherein the processing circuitry is further configured to:
receive, from the base station side device, one or more prediction models determined in the prediction model library based on the model requirement, or prediction information derived from the one or more prediction models.

14. The electronic device according to claim 13, wherein when there is no prediction model in the prediction model library that meets the constraint condition or the model requirement, another prediction model in the prediction model library is taken as the determined prediction model.

15. The electronic device according to claim 13, wherein the processing circuitry is further configured to: when there is no prediction model in the prediction model library that meets the constraint condition or the model requirement, report the measurement information of the downlink beam to the base station side device so as to train the prediction model that meets the constraint condition or the model requirement.

16. The electronic device according to claim 4 or 11, wherein the prediction model is deployed on the base station side device.

17. The electronic device according to claim 11, wherein the processing circuitry is further configured to:
determine, in a pre-acquired prediction model library, the prediction model that meets the constraint condition.

18. The electronic device according to claim 17, wherein the prediction model is deployed in the terminal device.

19. A method for wireless communication, comprising:
determining a coherence time of a channel in which a terminal device is located, based on a moving speed of the terminal device; and
determine, based on the coherence time, a constraint condition for selecting a prediction model for downlink beam prediction for the terminal device, wherein the prediction model determines, based on K pieces of measurement information obtained through sequential K beam measurements for a downlink beam by a terminal device side, sequential F pieces of prediction information for the downlink beam, wherein K and F are each a natural number greater than or equal to 1,
wherein the constraint condition comprises that the time from the time of the first beam measurement among the K beam measurements to the time of the last piece of prediction information among F pieces of prediction information is less than or equal to the coherence time.

20. A non-transitory computer-readable storage medium having executable instructions stored thereon, wherein when executed by a processor, the executable instructions cause the processor to perform the method for wireless communication according to claim 19.
